(19) **Europäisches Patentamt / European Patent Office / Office européen des brevets**

(11) **EP 4 787 585 A1**

(12) **EUROPEAN PATENT APPLICATION**
published in accordance with Art. 153(4) EPC

(43) Date of publication:
05.08.2026 Bulletin 2026/32

(21) Application number: 23954406.7

(22) Date of filing: 29.09.2023

(51) International Patent Classification (IPC):
$H01M\ 50/342^{(2021.01)}$    $H01M\ 50/103^{(2021.01)}$
$H01M\ 50/15^{(2021.01)}$

(52) Cooperative Patent Classification (CPC):
H01M 50/103; H01M 50/15; H01M 50/342;
Y02E 60/10

(86) International application number:
PCT/JP2023/035797

(87) International publication number:
WO 2025/069440 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Vehicle Energy Japan Inc.
Hitachinaka-shi, Ibaraki 312-8505 (JP)

(72) Inventors:
• SUZUKI Takayuki
  Hitachinaka-shi, Ibaraki 312-8505 (JP)
• WATANABE Kouichi
  Hitachinaka-shi, Ibaraki 312-8505 (JP)

(74) Representative: MERH-IP Matias Erny Reichl
Hoffmann
Patentanwälte PartG mbB
Paul-Heyse-Straße 29
80336 München (DE)

(54) **SAFETY VALVE, EXTERIOR BODY, AND BATTERY**

(57)    A safety valve (530) includes a middle section (531) formed in a rectangular shape at a depressed section (520f) of an exterior body (lid 520), one end section (532) that is continuous with the middle section (531) at the depressed section (520f) and is formed in a semicircular shape on the side of one end (531p) of the middle section (531) along a first direction (longitudinal direction X), and another end section (533) that is continuous with the middle section (531) at the depressed section (520f) and is formed in a semicircular shape on the side of another end (531q) of the middle section (531) along the first direction. A first groove (531a) and a second groove (531b) of the safety valve (530) are formed in linear shapes, a third groove (532c) and a fourth groove (533d) of the safety valve (530) are formed in arcuate shapes, and the thickness of the first groove (531a) is thicker than the thickness of the second groove (531b), the third groove (532c), and the fourth groove (533d).

[FIG. 13]

EP 4 787 585 A1

**Description**

Technical Field

The present invention relates to a safety valve, an exterior body, and a battery.

Background Art

There are conventionally known safety valves to be used for batteries (see Patent Documents 1 to 3, for example). A safety valve is provided to the housing of a battery. The safety valve ruptures outward from the battery at the housing of the battery when the internal pressure of the battery has reached a predetermined value.

Prior Art Document

Patent Documents

Patent Document 1: JP-2004-111155-A
Patent Document 2: JP-2000-285892-A
Patent Document 3: Japanese Patent No. 4716538

Summary of the Invention

Problem to be Solved by the Invention

There is a demand for a safety valve that can rupture sufficiently at a predetermined pressure while being retained at an exterior body, and for the exterior body and a battery including the safety valve.

Means for Solving the Problem

A safety valve according to the present invention is a safety valve provided to a battery having a charge/discharge body and an exterior body that houses the charge/discharge body and extends along a first direction. The exterior body to be used is one including a depressed section including a first inner edge that is formed in a linear shape along the first direction on one side along a second direction intersecting the first direction, a second inner edge that is formed in a linear shape along the first direction on another side along the second direction and faces the first inner edge along the second direction, a third inner edge that is continuous with the first inner edge and the second inner edge and is formed in an arcuate shape, and a fourth inner edge that faces the third inner edge along the first direction, is continuous with the first inner edge and the second inner edge, and is formed in an arcuate shape. The safety valve includes a middle section formed in a rectangular shape at the depressed section of the exterior body, one end section that is continuous with the middle section at the depressed section and is formed in a semicircular shape on one end side of the middle section along the first direction, and another end section that is continuous with the middle section at the depressed section and is formed in a semicircular shape on another end side of the middle section along the first direction. The middle section, the one end section, and the other end section are thinner than the exterior body. The middle section includes a first groove that is adjacent to the first inner edge and is formed in a recessed manner, and a second groove that is adjacent to the second inner edge and is formed in a recessed manner. The one end section includes a third groove that is continuous with the first groove and the second groove, is adjacent to the third inner edge, and is formed in a recessed manner. The other end section includes a fourth groove that is continuous with the first groove and the second groove, is adjacent to the fourth inner edge, and is formed in a recessed manner. The first groove and the second groove are formed in linear shapes. The third groove and the fourth groove are formed in arcuate shapes. The thickness of the first groove is thicker than the thickness of the second groove, the third groove, and the fourth groove.

An exterior body according to the present invention is an exterior body that houses a charge/discharge body and extends along a first direction. The exterior body includes a depressed section and a safety valve. The depressed section includes a first inner edge that is formed in a linear shape along the first direction on one side along a second direction intersecting the first direction, a second inner edge that is formed in a linear shape along the first direction on another side along the second direction and faces the first inner edge along the second direction, a third inner edge that is continuous with the first inner edge and the second inner edge and is formed in an arcuate shape, and a fourth inner edge that faces the third inner edge along the first direction, is continuous with the first inner edge and the second inner edge, and is formed in an arcuate shape. The safety valve includes a middle section formed in a rectangular shape at the depressed section of the exterior body, one end section that is continuous with the middle section at the depressed section and is formed in a semicircular shape on one end side of the middle section along the first direction, and another end section that is continuous with the middle section at the depressed section and is formed in a semicircular shape on another end side of the middle section along the first direction. The middle section, the one end section, and the other end section are thinner than the exterior body. The middle section includes a first groove that is adjacent to the first inner edge and is formed in a recessed manner, and a second groove that is adjacent to the second inner edge and is formed in a recessed manner. The one end section includes a third groove that is continuous with the first groove and the second groove, is adjacent to the third inner edge, and is formed in a recessed manner. The other end section includes a fourth groove that is continuous with the first groove and the second groove, is adjacent to the fourth inner edge, and is formed in a recessed manner. The first groove and the second groove are formed in linear shapes. The third groove and the fourth groove are formed in arcuate shapes. The thickness of the first groove is thicker than the thickness of the second groove, the third groove, and the fourth groove.

A battery according to the present invention has a charge/discharge body, an exterior body that houses the charge/discharge body and extends along a first direction, and a safety valve provided to the exterior body. The exterior body includes a depressed section. The depressed section includes a first inner edge that is formed in a linear shape along the first direction on one side along a second direction intersecting the first direction, a second inner edge that is formed in a linear shape along the first direction on another side along the second direction and faces the first inner edge along the second direction, a third inner edge that is continuous with the first inner edge and the second inner edge and is formed in an arcuate shape, and a fourth inner edge that faces the third inner edge along the first direction, is continuous with the first inner edge and the second inner edge, and is formed in an arcuate shape. The safety valve includes a middle section formed in a rectangular shape at the depressed section of the exterior body, one end section that is continuous with the middle section at the depressed section and is formed in an arcuate shape on one end side of the middle section along the first direction, and another end section that is continuous with the middle section at the depressed section and is formed in an arcuate shape on another end side of the middle section along the first direction. The middle section, the one end section, and the other end section are thinner than the exterior body. The middle section includes a first groove that is adjacent to the first inner edge and is formed in a recessed manner, and a second groove that is adjacent to the second inner edge and is formed in a recessed manner. The one end section includes a third groove that is continuous with the first groove and the second groove, is adjacent to the third inner edge, and is formed in a recessed manner. The other end section includes a fourth groove that is continuous with the first groove and the second groove, is adjacent to the third inner edge, and is formed in a recessed manner. The length along the first direction of the middle section is equal to or greater than 1 mm, and the length of the middle section is equal to or greater than 0.5 times and equal to or less than three times the diameter of the one end section and the other end section. The thickness of the second groove, the third groove, and the fourth groove is equal to or greater than 0.2 times and equal to or less than 0.7 times the thickness of the first groove.

Advantages of the Invention

It is possible to obtain a safety valve that can rupture sufficiently at a predetermined pressure while being retained at an exterior body, and obtain the exterior body and a battery including the safety valve.

Brief Description of the Drawings

[FIG. 1] FIG. 1 is a perspective view depicting a battery 1 according to an embodiment.
[FIG. 2] FIG. 2 is a cross-sectional perspective view depicting constituent members around a negative electrode terminal 420 of the battery 1.
[FIG. 3] FIG. 3 is a side view depicting constituent members in FIG. 2.
[FIG. 4] FIG. 4 is a cross-sectional perspective view depicting constituent members around a positive electrode terminal 410 of the battery 1.
[FIG. 5] FIG. 5 is a side view depicting constituent members in FIG. 4.
[FIG. 6] FIG. 6 is a partially exploded perspective view depicting the battery 1.
[FIG. 7] FIG. 7 is a perspective view depicting a charge/discharge body 100 of the battery 1.
[FIG. 8] FIG. 8 is a partial cross-sectional side view depicting the charge/discharge body 100 in FIG. 7.
[FIG. 9] FIG. 9 is a partial cross-sectional side view depicting a charge/discharge body 1100 according to a modification example.
[FIG. 10] FIG. 10 is an exploded perspective view depicting constituent members around the negative electrode terminal 420 of the battery 1.

[FIG. 11] FIG. 11 is an exploded perspective view depicting constituent members around the positive electrode terminal 410 of the battery 1.

[FIG. 12] FIG. 12 is an exploded perspective view depicting constituent members around a safety valve 530 and a sealing plug 540 of the battery 1.

[FIG. 13] FIG. 13 is a top view depicting the safety valve 530 and a lid 520 in FIG. 12.

[FIG. 14] FIG. 14 is a cross-sectional perspective view depicting the safety valve 530 and the lid 520 in FIG. 13 taken along a longitudinal direction X.

[FIG. 15] FIG. 15 is a perspective view depicting an area 15 in FIG. 14.

[FIG. 16] FIG. 16 is a perspective view depicting an area 16 in FIG. 14.

[FIG. 17] FIG. 17 is a cross-sectional perspective view depicting the safety valve 530 and the lid 520 in FIG. 13 taken along a lateral direction Y.

[FIG. 18] FIG. 18 is a perspective view depicting an area 18 in FIG. 17.

[FIG. 19] FIG. 19 is a perspective view depicting an area 19 in FIG. 17.

[FIG. 20] FIG. 20 is a schematic diagram depicting a relation between the rupture pressure of the safety valve 530: P and the thickness of a second groove 531b, a third groove 532b, and a fourth groove 533d of the safety valve 530: t.

[FIG. 21] FIG. 21 is a schematic diagram depicting a relation between the force applied to a first groove 531a of the safety valve 530 and the elongation of the first groove 531a of the safety valve 530.

[FIG. 22] FIG. 22 is a graph depicting simulation results of the displacement area and displacement amount of the second groove 531b of the safety valve 530 under Condition 1 to Condition 9 in Table 1.

[FIG. 23] FIG. 23 is a graph depicting simulation results of the maximum value of the displacement area of the second groove 531b of the safety valve 530 under Condition 1 to Condition 9 in Table 1.

[FIG. 24] FIG. 24 is a photograph depicting experimental results obtained under Condition 14 in Table 2.

[FIG. 25] FIG. 25 is a simulation image obtained under Condition 14 in Table 2.

[FIG. 26] FIG. 26 is a photograph depicting experimental results obtained under Condition 16 in Table 2.

[FIG. 27] FIG. 27 is a simulation image obtained under Condition 16 in Table 2.

[FIG. 28] FIG. 28 is a cross-sectional perspective view depicting a safety valve 810 and the lid 520 according to a first modification example of the embodiment.

[FIG. 29] FIG. 29 is a cross-sectional perspective view depicting a safety valve 820 and the lid 520 according to a second modification example of the embodiment.

[FIG. 30] FIG. 30 is a cross-sectional perspective view depicting a safety valve 830 and the lid 520 according to a third modification example of the embodiment.

[FIG. 31] FIG. 31 is a cross-sectional perspective view depicting a safety valve 840 and the lid 520 according to a fourth modification example of the embodiment.

[FIG. 32] FIG. 32 is a cross-sectional perspective view depicting a safety valve 850 and the lid 520 according to a fifth modification example of the embodiment.

[FIG. 33] FIG. 33 is a cross-sectional perspective view depicting a safety valve 860 and the lid 520 according to a sixth modification example of the embodiment.

Modes for Carrying Out the Invention

Embodiments for carrying out the present invention are explained with reference to the figures. In order to facilitate understanding of each embodiment, the sizes or ratios of constituent members are exaggerated in each figure in some cases. In each figure, identical reference characters are given to identical constituent elements. In each figure, a longitudinal direction X, a lateral direction Y, and a height direction Z of a battery 1 are represented by arrows. In each figure, the longitudinal direction X, the lateral direction Y, and the height direction Z of the battery 1 represent relative positional relations in the figure. That is, in a case where the battery 1 is rotated 180 degrees to arrange its upper surface and lower surface in a reversed state or in a case where the battery 1 is rotated 90 degrees to arrange its upper surface as a side surface, the longitudinal direction X, the lateral direction Y, and the height direction Z of the battery 1 change.

(Configuration of Battery 1 According to Embodiment)

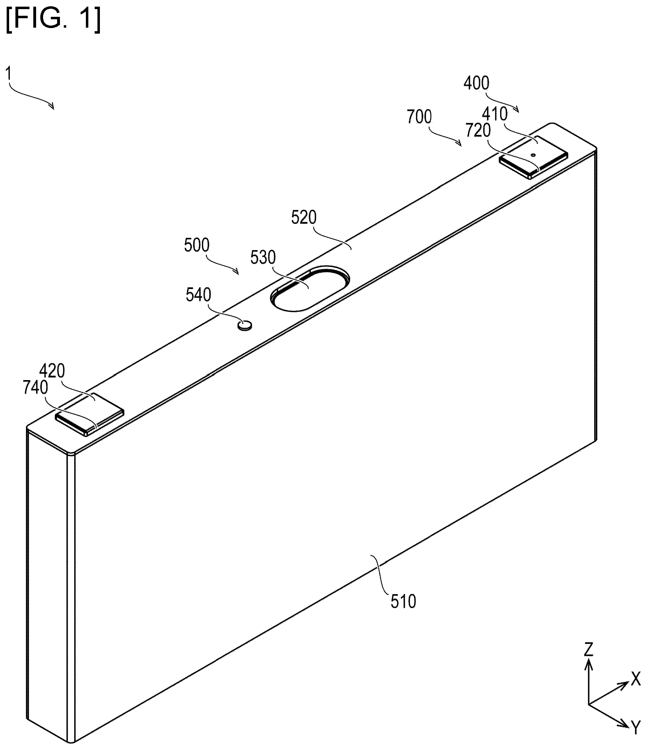

The configuration of the battery 1 is explained with reference to FIG. 1 to FIG. 19.

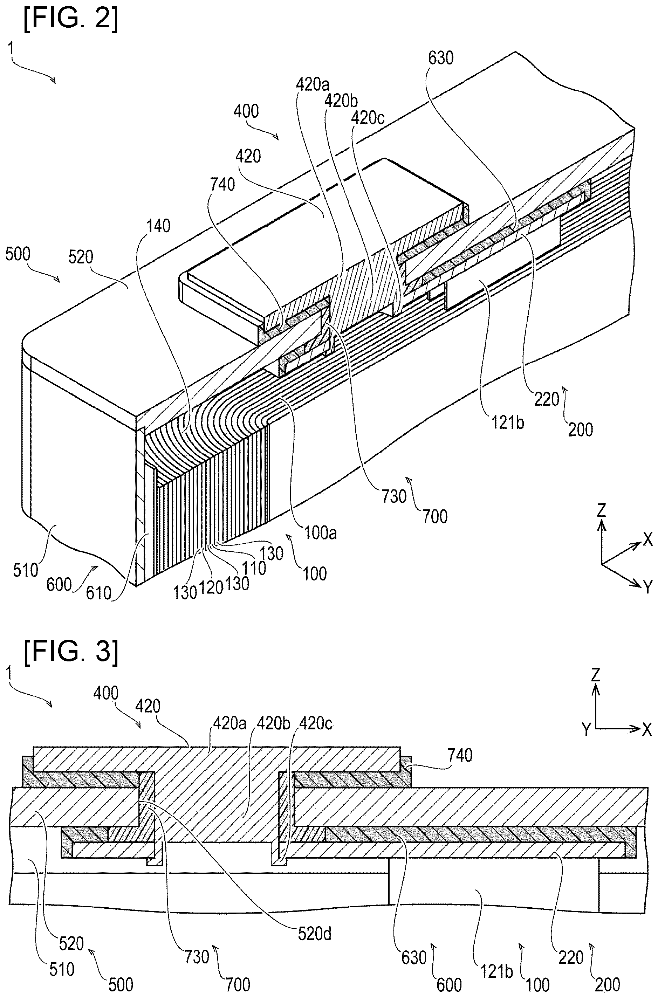

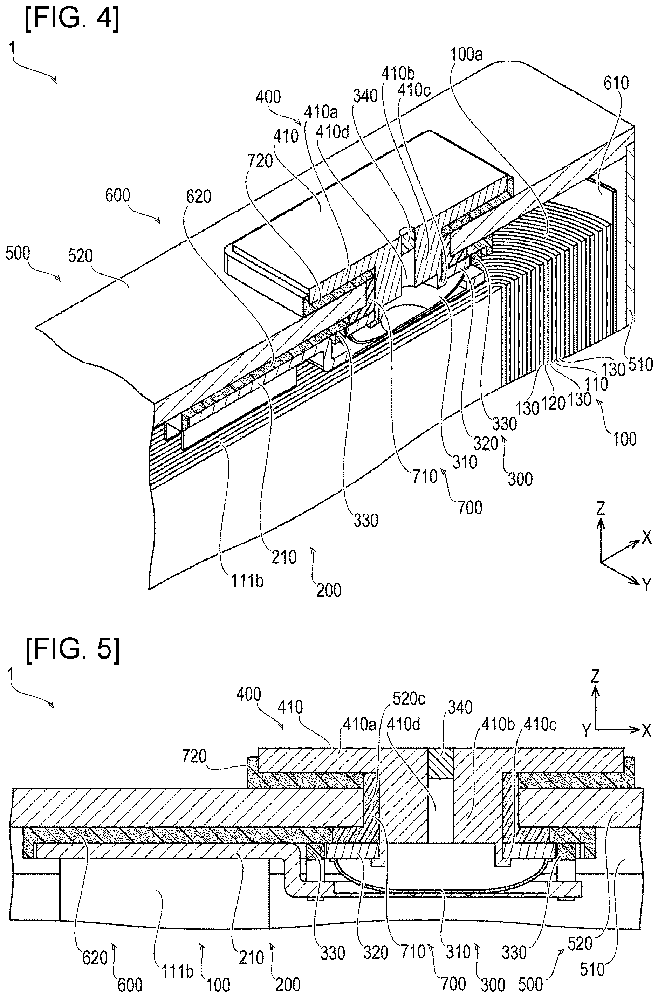

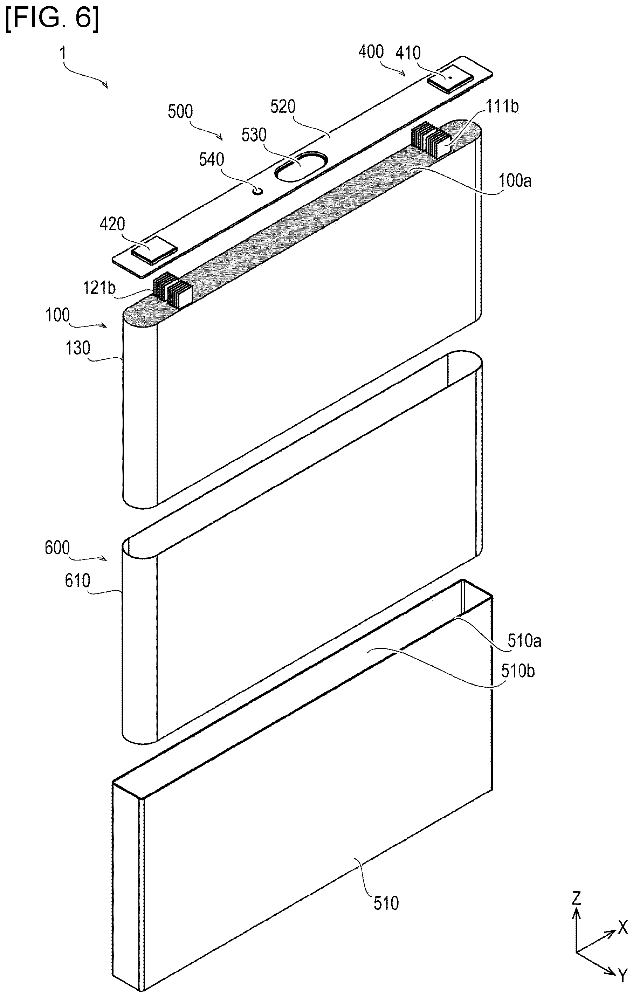

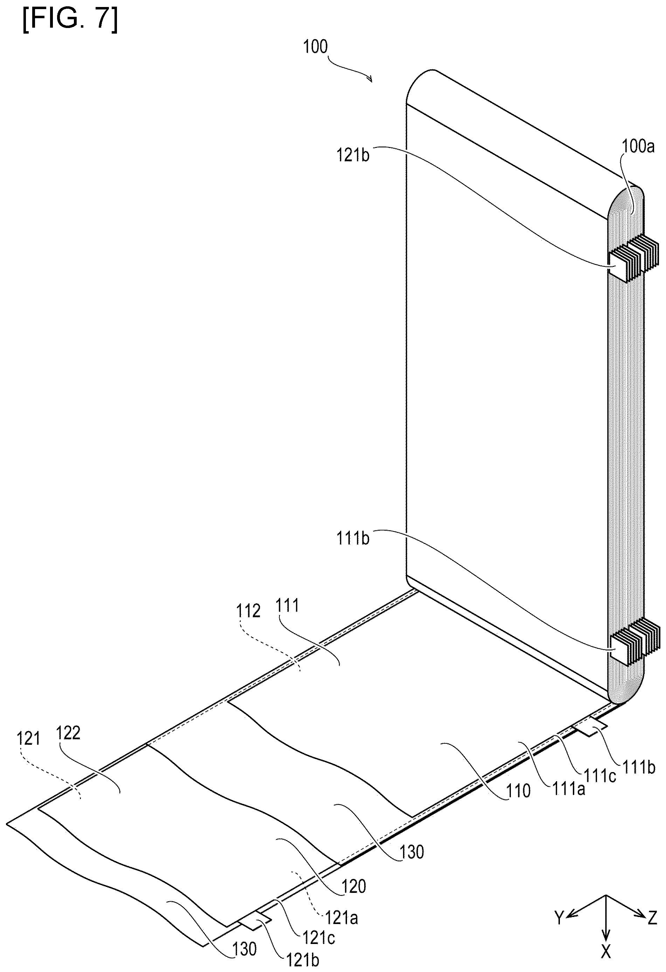

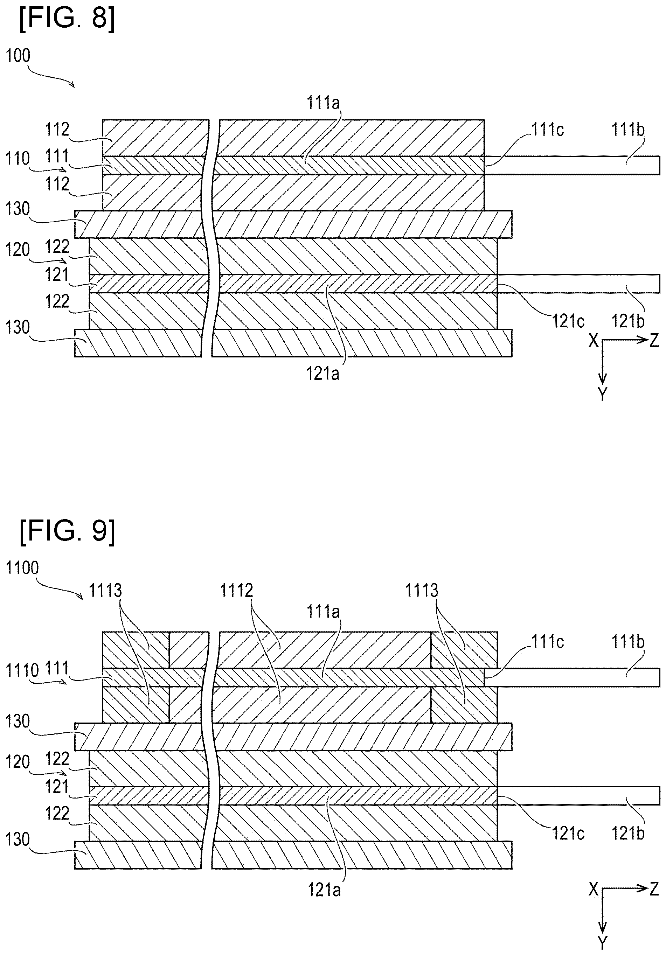

FIG. 1 is a perspective view depicting the battery 1 according to the embodiment. FIG. 2 is a cross-sectional perspective view depicting constituent members around a negative electrode terminal 420 of the battery 1. FIG. 3 is a side view depicting constituent members in FIG. 2. FIG. 4 is a cross-sectional perspective view depicting constituent members around a positive electrode terminal 410 of the battery 1. FIG. 5 is a side view depicting constituent members in FIG. 4. FIG. 6 is a partially exploded perspective view depicting the battery 1. FIG. 7 is a perspective view depicting a charge/discharge body 100 of the battery 1. FIG. 8 is a partial cross-sectional side view depicting the charge/discharge body 100 in FIG. 7.

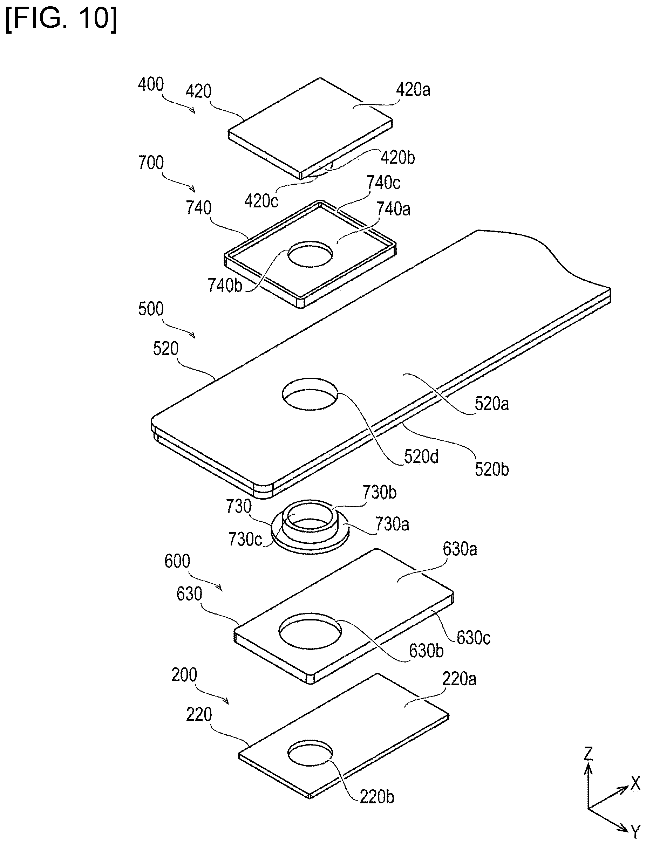

FIG. 9 is a partial cross-sectional side view depicting a charge/discharge body 1100 according to a modification example. FIG. 10 is an exploded perspective view depicting constituent members around the negative electrode terminal 420 of the battery 1.

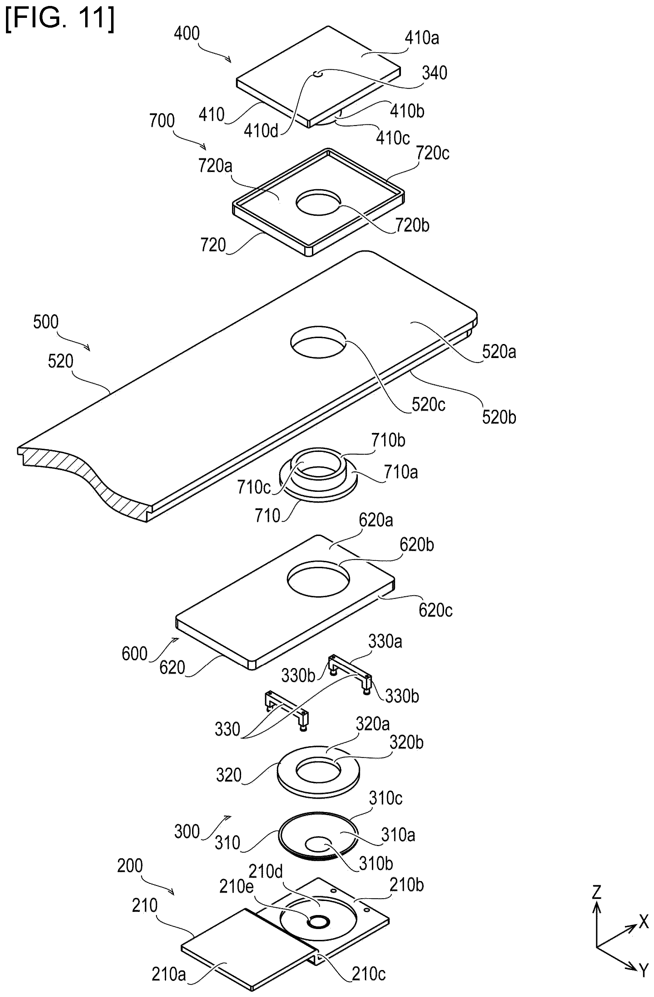

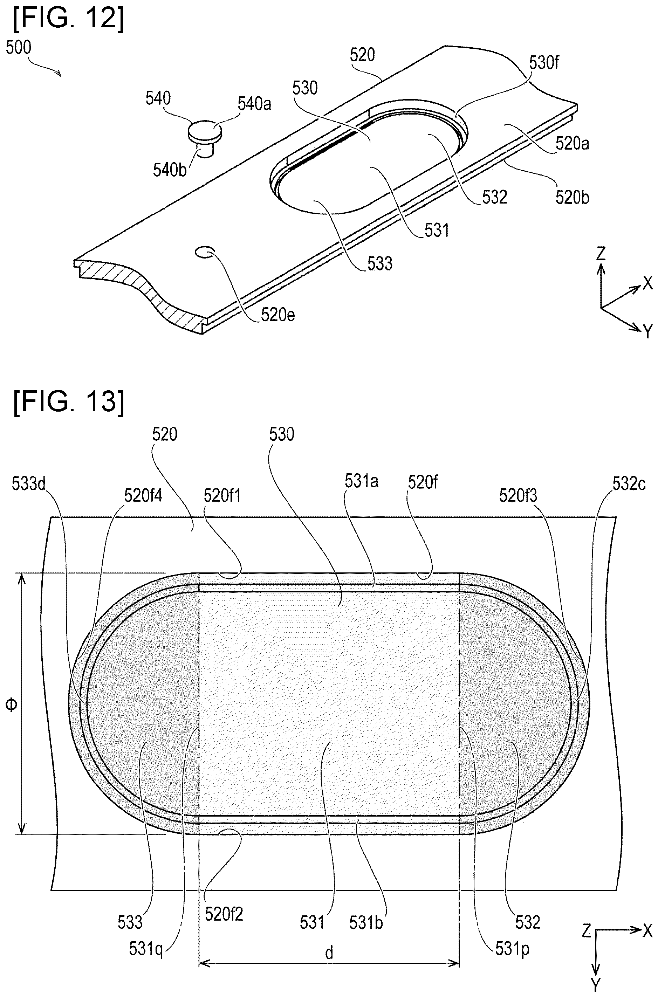

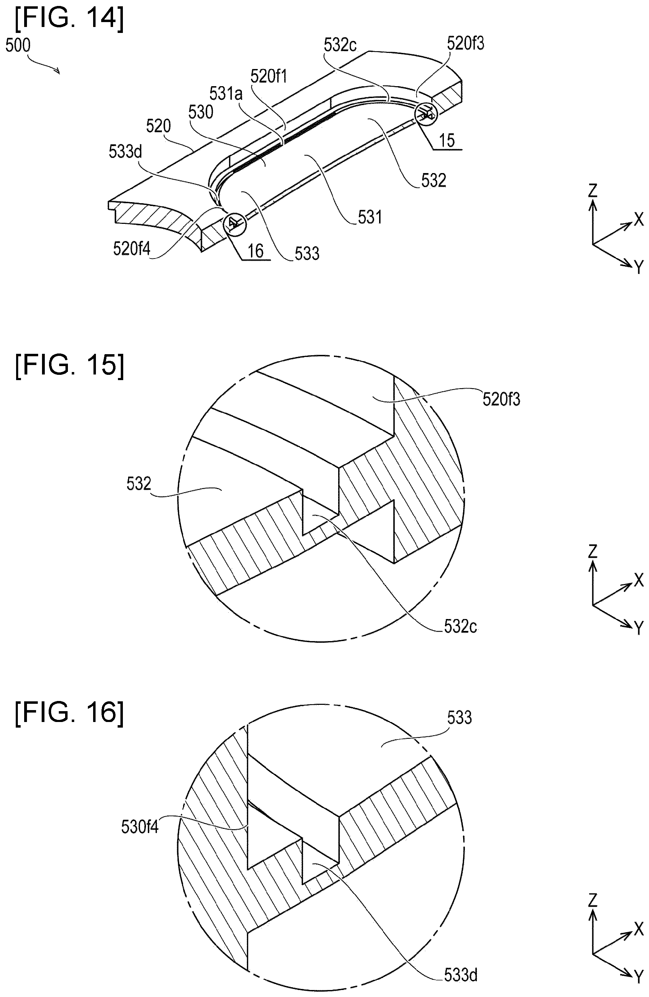

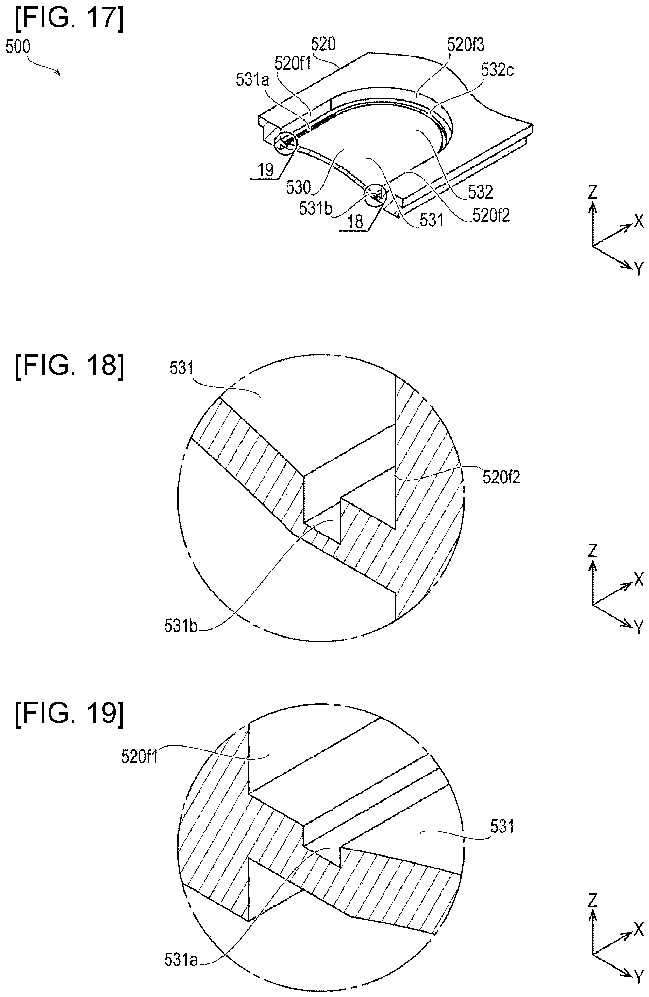

FIG. 11 is an exploded perspective view depicting constituent members around the positive electrode terminal 410 of the battery 1. FIG. 12 is an exploded perspective view depicting constituent members around a safety valve 530 and a sealing plug 540 of the battery 1. FIG. 13 is a top view depicting the safety valve 530 and a lid 520 in FIG. 12. FIG. 14 is a cross-sectional perspective view depicting the safety valve 530 and the lid 520 in FIG. 13 taken along the longitudinal direction X. FIG. 15 is a perspective view depicting an area 15 in FIG. 14. FIG. 16 is a perspective view depicting an area 16 in FIG. 14. FIG. 17 is a cross-sectional perspective view depicting the safety valve 530 and the lid 520 in FIG. 13 taken along the lateral direction Y. FIG. 18 is a perspective view depicting an area 18 in FIG. 17. FIG. 19 is a perspective view depicting an area 19 in FIG. 17.

The battery 1 includes the charge/discharge body 100 that charges and discharges electricity, a current collector 200 connected with the charge/discharge body 100, a current interrupter 300 connected with the current collector 200, and an electrode terminal 400 connected with the current collector 200 or the current interrupter 300. In addition, the battery 1 includes a housing 500 that houses constituent members of the battery 1 or to which constituent members of the battery 1 are attached, an insulator 600 that insulates the constituent members of the battery 1 from the housing 500, and a sealing body 700 that seals the constituent members of the battery 1 and the housing 500.

The charge/discharge body 100 charges and discharges electricity. The charge/discharge body 100 depicted in FIG. 2 to FIG. 8 includes a positive electrode 110, a negative electrode 120, a separator 130, and an electrolyte 140. The charge/discharge body 100 is formed by winding, in a rectangular parallelepiped shape, a constituent member formed by stacking the positive electrode 110, the separator 130, the negative electrode 120, and the separator 130 in this order. The charge/discharge body 100 may be formed by winding or may be formed by stacking.

The positive electrode 110 includes an elongated positive electrode current collecting layer 111, and positive electrode active material layers 112 joined to both surfaces of the positive electrode current collecting layer 111. The positive electrode current collecting layer 111 includes a current collecting section 111a and positive electrode tabs 111b. The current collecting section 111a is joined with the positive electrode active material layers 112. As depicted in FIG. 8, for example, the positive electrode active material layers 112 face the entire area along the lateral direction of the current collecting section 111a. From a side edge 111c along the longitudinal direction of the current collecting section 111a, the positive electrode tabs 111b protrude in the lateral direction of the current collecting section 111a. The positive electrode tabs 111b are formed integrally with the current collecting section 111a. A plurality of the positive electrode tabs 111b are formed for one current collecting section 111a. The positive electrode 110 may be formed by joining the positive electrode active material layer 112 only to one surface of the positive electrode current collecting layer 111. For example, the positive electrode current collecting layer 111 is formed using aluminum or an aluminum alloy. The positive electrode active material layer 112 includes a positive electrode active material formed using a lithium-containing composite oxide, a binder, an electrical conduction agent, and the like. For example, a metal element like nickel (Ni), cobalt (Co), or manganese (Mn), and lithium (Li) are used for the lithium-containing composite oxide.

The negative electrode 120 includes an elongated negative electrode current collecting layer 121, and negative electrode active material layers 122 joined to both surfaces of the negative electrode current collecting layer 121. The negative electrode current collecting layer 121 includes a current collecting section 121a and negative electrode tabs 121b. As depicted in FIG. 8, the current collecting section 121a of the negative electrode 120 is longer in width along the lateral direction than the current collecting section 111a of the positive electrode 110. Both ends along the lateral direction of the current collecting section 111a of the positive electrode 110 are positioned in the range along the lateral direction of the current collecting section 121a of the negative electrode 120 with the separator 130 being interposed between the current collecting section 111a and the current collecting section 121a. The current collecting section 121a is joined with the negative electrode active material layers 122. For example, the negative electrode active material layers 122 face the entire area along the lateral direction of the current collecting section 121a. From a side edge 121c along the longitudinal direction of the current collecting section 121a, the negative electrode tabs 121b protrude in the lateral direction of the current collecting section 121a. In a state where the negative electrode 120 is stacked on the positive electrode 110 with the separator 130 being interposed therebetween, the negative electrode tabs 121b protrude in the same direction as the protrusion of the positive electrode tabs 111b of the positive electrode 110. In a state where the negative electrode 120 is stacked on the positive electrode 110 with the separator 130 being interposed therebetween, the negative electrode tabs 121b are separated from the positive electrode tabs 111b of the positive electrode 110. The negative electrode tabs 121b are formed integrally with the current collecting section 121a. A plurality of the negative electrode tabs 121b are formed for one current collecting section 121a. The negative electrode 120 may be formed by joining the negative electrode active material layer 122 only to one surface of the negative electrode current collecting layer 121. For example, the negative electrode current collecting layer 121 is formed using copper or a copper alloy. The negative electrode active material layer 122 includes a negative electrode active material formed using a carbon-based material, a binder, an electrical conduction agent, and the like. For example, graphite is used for the carbon-based material.

The separator 130 allows lithium ions to pass therethrough while insulating the positive electrode 110 from the negative electrode 120. The separator 130 is formed in an elongated shape. As depicted in FIG. 8, the separator 130 is longer in width along the lateral direction than the current collecting section 111a of the positive electrode 110 and the current collecting section 121a of the negative electrode 120. Both ends along the lateral direction of the current collecting section 111a of the positive electrode 110 are positioned in the range along the lateral direction of the separator 130, and both ends along the lateral direction of the current collecting section 121a of the negative electrode 120 are positioned in the range along the lateral direction of the separator 130. The separator 130 is formed using a porous material. Polyethylene (PE) or polypropylene (PP) is used for the separator 130. Instead of the separator 130, an insulating member may be used. The insulating member may be provided on a side of the positive electrode 110 facing the negative electrode 120. The insulating member may be provided on a side of the negative electrode 120 facing the positive electrode 110. The insulating member to be used may be heat-resistant. In the case of such a configuration, the separator 130 is not essential.

The electrolyte 140 allows lithium ions to pass therethrough between the positive electrode 110 and the negative electrode 120. The electrolyte 140 is also referred to as an electrolyte solution. The electrolyte 140 includes a solvent and a solute. The electrolyte 140 may include an additive. For example, the solvent includes an organic solvent. For example, a carbonate ester such as ethylene carbonate is used as the organic solvent. For example, the solute includes a lithium salt. For example, lithium hexafluorophosphate ($LiPF_6$) is used as the lithium salt.

The charge/discharge body 1100 according to a modification example of the charge/discharge body 100 is explained with reference to FIG. 9. The configuration of a positive electrode 1110 in the charge/discharge body 1100 is different from the configuration of the positive electrode 110 in the charge/discharge body 100. In the configuration of the charge/discharge body 1100, constituent elements which are the same as constituent elements of the charge/discharge body 100 are given the same reference characters, and explanations thereof are omitted. Positive electrode active material layers 1112 of the charge/discharge body 1100 face a portion, excluding both ends, along the lateral direction of the current collecting section 111a. Heat-resistant insulation layers 1113 of the charge/discharge body 1100 are joined to both ends along the lateral direction of the current collecting section 111a and base end portions of the positive electrode tabs 111b.

The current collector 200 is connected with the charge/discharge body 100. The current collector 200 is also referred to as a current collecting board. The current collector 200 depicted in FIG. 2 to FIG. 5, FIG. 10, and FIG. 11 includes a positive electrode current collecting board 210 and a negative electrode current collecting board 220.

The positive electrode current collecting board 210 conductively connects the positive electrode tabs 111b of the charge/discharge body 100 and the positive electrode terminal 410 via the current interrupter 300. The positive electrode current collecting board 210 includes a first base section 210a in a rectangular parallelepiped board shape, a second base section 210b in a rectangular parallelepiped board shape, and a coupling section 210c that couples the first base section 210a and the second base section 210b stepwise at different heights. A recessed section 210d where the thickness of the second base section 210b is thinner is formed on an upper surface of the second base section 210b. A fragile section 210e where the recessed section 210d is depressed in a ring shape and is formed to be partially fragile is formed at the middle of the recessed section 210d. For example, the positive electrode current collecting board 210 is formed using aluminum or an aluminum alloy.

The negative electrode current collecting board 220 conductively connects the negative electrode tabs 121b of the charge/discharge body 100 and the negative electrode terminal 420. The negative electrode current collecting board 220 includes a base section 220a in a rectangular parallelepiped board shape and an insertion hole 220b penetrating the base section 220a. An insertion section 420b of the negative electrode terminal 420 is inserted to the insertion hole 220b of the negative electrode current collecting board 220. For example, the negative electrode current collecting board 220 is formed using copper or a copper alloy.

When the internal pressure of the battery 1 is equal to or lower than a predetermined value, the current interrupter 300 is kept joined to the positive electrode current collecting board 210 and keeps a current path between the current collector 200 and the positive electrode terminal 410 uninterrupted. Meanwhile, when the internal pressure of the battery 1 rises and exceeds the predetermined value, the current interrupter 300 opens the current path between the current collector 200 and the positive electrode terminal 410 and interrupts the current path between the current collector 200 and the positive electrode terminal 410 by being separated from the positive electrode current collecting board 210. The current interrupter 300 is also referred to as a current interrupt device (CID). The current interrupter 300 is not an essential constituent element in the battery 1. The current interrupter 300 depicted in FIG. 4, FIG. 5, and FIG. 11 includes a diaphragm 310, a conductive member 320, and a pair of support bases 330.

The diaphragm 310 includes a curved and cylindrical body section 310a, a disk-shaped first joining section 310b provided on a tip end side of the body section 310a, and a ring-shaped second joining section 310c provided on a base end side of the body section 310a. The first joining section 310b is joined to the recessed section 210d of the positive electrode current collecting board 210. The second joining section 310c is joined to the conductive member 320. The first joining section 310b of the diaphragm 310 ruptures while deforming outward from the battery 1 along with the recessed section 210d of the positive electrode current collecting board 210 when the internal pressure of the battery 1 rises and exceeds the predetermined value. As a result, the diaphragm 310 is separated from the positive electrode current collecting board 210. Accordingly, the current path between the current collector 200 and the positive electrode terminal 410 is interrupted. For example, the diaphragm 310 is formed using aluminum or an aluminum alloy.

The conductive member 320 is formed in a cylindrical shape. The conductive member 320 includes a disk-shaped base section 320a and an insertion hole 320b which is an opening at the middle of the base section 320a. An upper surface of the conductive member 320 is joined with a positive electrode side insulating board 620. An outer edge of a lower surface of the conductive member 320 is joined with the second joining section 310c of the diaphragm 310. For example, the conductive member 320 is formed using aluminum or an aluminum alloy.

Each support base 330 includes a body section 330a in a rectangular parallelepiped shape extending in the lateral direction of the battery 1 and leg sections 330b extending downward from both sides in the longitudinal direction of the body section 330a. One support base 330 is provided to each of both ends of the diaphragm 310 along the longitudinal direction of the battery 1. The body sections 330a are attached to the positive electrode side insulating board 620. The leg sections 330b are attached to the second base section 210b of the positive electrode current collecting board 210. For example, the support base 330 is formed using insulating resin.

A plug 340 is provided to a penetrating section 410d of the positive electrode terminal 410. The plug 340 falls out of the penetrating section 410d when the internal pressure of the battery 1 has risen. Specifically, when the diaphragm 310 deforms outward from the battery 1, and the pressure of the space between the diaphragm 310 and the positive electrode terminal 410 rises, the plug 340 is discharged outward from the battery from the penetrating section 410d of the positive electrode terminal 410. The plug 340 is formed using resin and is molded into the penetrating section 410d of the positive electrode terminal 410.

The electrode terminal 400 is connected with the current collector 200 or the current interrupter 300. The electrode terminal 400 depicted in FIG. 1 to FIG. 6, FIG. 10, and FIG. 11 includes the positive electrode terminal 410 and the negative electrode terminal 420.

For example, as depicted in FIG. 5, the positive electrode terminal 410 is connected with the conductive member 320 of the current interrupter 300. As depicted in FIG. 4, FIG. 5, and FIG. 11, the positive electrode terminal 410 includes a base section 410a in a rectangular parallelepiped board shape, an insertion section 410b in a columnar shape protruding downward from the base section 410a in FIG. 4, and a joining section 410c in a cylindrical shape protruding downward from the outer circumference of the base section 410a in FIG. 4. The positive electrode terminal 410 includes the penetrating section 410d penetrating the base section 410a and the insertion section 410b. The base section 410a is in contact with a base section 720a of a positive electrode side second gasket 720. The insertion section 410b is inserted to an insertion hole 720b of the positive electrode side second gasket 720, a positive electrode insertion hole 520c of the lid 520, an insertion hole 620b of the positive electrode side insulating board 620, and the insertion hole 320b of the conductive member 320. As depicted in FIG. 5 and FIG. 11, the joining section 410c protrudes downward from the insertion hole 320b of the conductive member 320, and is joined to the conductive member 320 by being pressed and widened radially outwardly. That is, the joining section 410c is swaged to the conductive member 320. Further, the joining section 410c is welded to the conductive member 320. The plug 340 of the current interrupter 300 is inserted to the penetrating section 410d. In such a configuration, a busbar joined to the positive electrode terminal 410 is provided with a through-hole that prevents interference with the plug 340. Alternatively, in such a configuration, the busbar joined to the positive electrode terminal 410 is arranged to prevent interference with the plug 340. Meanwhile, in a case where the current interrupter 300 is not provided to the battery 1, it is not necessary to provide the penetrating section 410d to the positive electrode terminal 410. That is, in a case where the current interrupter 300 is not provided to the battery 1, the busbar joined to the positive electrode terminal 410 may not be provided with a through-hole. For example, the positive electrode terminal 410 is formed using aluminum or an aluminum alloy.

For example, as depicted in FIG. 3, the negative electrode terminal 420 is connected with the negative electrode current collecting board 220. As depicted in FIG. 3 and FIG. 10, the negative electrode terminal 420 includes a base section 420a in a rectangular parallelepiped board shape, the insertion section 420b in a columnar shape protruding downward from the base section 420a in FIG. 3, and a joining section 420c in a cylindrical shape protruding downward from the outer circumference of the base section 420a in FIG. 3. The base section 420a is in contact with a base section 740a of a negative electrode side second gasket 740. The insertion section 420b is inserted to an insertion hole 740b of the negative electrode side second gasket 740, a negative electrode insertion hole 520d of the lid 520, an insertion hole 630b of a negative electrode side insulating board 630, and the insertion hole 220b of the negative electrode current collecting board 220. As depicted in FIG. 3 and FIG. 10, the joining section 420c protrudes downward from the insertion hole 220b of the negative electrode current collecting board 220, and is joined to the negative electrode current collecting board 220 by being pressed and widened radially outwardly. That is, the joining section 420c is swaged to the negative electrode current collecting board 220. Further, the joining section 420c is welded to the negative electrode current collecting board 220. For example, the negative electrode terminal 420 is formed using copper or a copper alloy.

The housing 500 houses constituent members of the battery 1, or constituent members of the battery 1 are attached to the housing 500. The housing 500 depicted in FIG. 1 to FIG. 6 and FIG. 10 to FIG. 19 includes a vessel 510, the lid 520, the safety valve 530, and the sealing plug 540.

(Configuration of Vessel 510 (Exterior Body) According to Embodiment)

The configuration of the vessel 510 (exterior body) according to the embodiment is explained with reference to FIG. 2, FIG. 4, and FIG. 6.

The vessel 510 is an exterior body. As depicted in FIG. 2 and FIG. 4, together with the lid 520, the vessel 510 houses the charge/discharge body 100 and the like. As depicted in FIG. 6, the vessel 510 extends along the longitudinal direction X (first direction). The vessel 510 is formed in a rectangular parallelepiped shape. As depicted in FIG. 6, the vessel 510 includes an opening 510a and a housing section 510b. As depicted in FIG. 6, the opening 510a is an opening along the longitudinal direction X and the lateral direction Y at the upper end of the vessel 510. The housing section 510b is depressed downward in the height direction Z from the opening 510a in the vessel 510. For example, the vessel 510 is formed using aluminum or an aluminum alloy. The vessel 510 may be provided with the safety valve 530.

(Configuration of Lid 520 (Exterior Body) According to Embodiment)

The configuration of the lid 520 (exterior body) according to the embodiment is explained with reference to FIG. 2 to FIG. 6 and FIG. 10 to FIG. 13.

The lid 520 is an exterior body. As depicted in FIG. 2 and FIG. 4, together with the vessel 510, the lid 520 houses the charge/discharge body 100 and the like. As depicted in FIG. 6, the lid 520 extends along the longitudinal direction X. The lid 520 seals the opening 510a of the vessel 510 depicted in FIG. 6. The lid 520 is formed in a rectangular shape along the longitudinal direction X. As depicted in FIG. 10 to FIG. 12, the lid 520 includes the positive electrode insertion hole 520c, the negative electrode insertion hole 520d, a liquid injection insertion hole 520e, and a depressed section 520f. For example, the lid 520 is formed using aluminum or an aluminum alloy.

As depicted in FIG. 11, the positive electrode insertion hole 520c is formed on one end side of the lid 520 along the longitudinal direction X. The positive electrode insertion hole 520c is a circular through-hole. The positive electrode insertion hole 520c penetrates the lid 520 from a front surface 520a to a back surface 520b along the height direction Z. As depicted in FIG. 5, the insertion section 410b of the positive electrode terminal 410 and a positive electrode side first gasket 710 of the sealing body 700 are inserted to the positive electrode insertion hole 520c.

As depicted in FIG. 10, the negative electrode insertion hole 520d is formed on another end side of the lid 520 along the longitudinal direction X. The negative electrode insertion hole 520d is located opposite to the positive electrode insertion hole 520c along the longitudinal direction X of the lid 520. The negative electrode insertion hole 520d is a circular through-hole. The negative electrode insertion hole 520d penetrates the lid 520 from the front surface 520a to the back surface 520b along the height direction Z. As depicted in FIG. 3, the insertion section 420b of the negative electrode terminal 420 and a negative electrode side first gasket 730 of the sealing body 700 are inserted to the negative electrode insertion hole 520d.

As depicted in FIG. 12, the liquid injection insertion hole 520e is formed through the lid 520. The liquid injection insertion hole 520e is formed between the positive electrode insertion hole 520c and the negative electrode insertion hole 520d along the longitudinal direction X of the lid 520. The liquid injection insertion hole 520e is a circular through-hole. The liquid injection insertion hole 520e penetrates the lid 520 from the front surface 520a to the back surface 520b along the height direction Z. An insertion section 540b of the sealing plug 540 is inserted and welded to the negative electrode insertion hole 520d.

As depicted in FIG. 1 and FIG. 12, the depressed section 520f is formed at the middle of the lid 520 along the longitudinal direction X. As depicted in FIG. 14 and FIG. 17, the depressed section 520f is depressed from the front surface 520a and the back surface 520b of the lid 520. As depicted in FIG. 13 to FIG. 19, the depressed section 520f includes a first inner edge 520f1, a second inner edge 520f2, a third inner edge 520f3, and a fourth inner edge 520f4.

The first inner edge 520f1 is formed in a linear shape along the longitudinal direction X (first direction) on one side of the depressed section 520f in the lateral direction Y (second direction). The lateral direction Y is a direction intersecting the longitudinal direction X. The lateral direction Y is a direction orthogonal to the longitudinal direction X in the embodiment. The first inner edge 520f1 is formed in a rectangular shape extending along the longitudinal direction X and the height direction Z at the depressed section 520f. The first inner edge 520f1 is formed in a relatively elongated shape along the longitudinal direction X.

The second inner edge 520f2 is formed in a linear shape along the longitudinal direction X (first direction) on another side of the depressed section 520f in the lateral direction Y. The second inner edge 520f2 faces the first inner edge 520f1 along the lateral direction Y at the depressed section 520f. The second inner edge 520f2 is formed in a rectangular shape extending along the longitudinal direction X and the height direction Z at the depressed section 520f. The second inner edge 520f2 is formed in a relatively elongated shape along the longitudinal direction X.

The third inner edge 520f3 is continuous with the first inner edge 520f1 and the second inner edge 520f2 at the depressed section 520f. The third inner edge 520f3 is formed in an arcuate shape along the lateral direction Y. The third inner edge 520f3 is formed in a curved rectangular shape along the lateral direction Y and the height direction Z. The third inner edge 520f3 is formed in a relatively elongated shape along the lateral direction Y.

The fourth inner edge 520f4 faces the third inner edge 520f3 along the longitudinal direction X at the depressed section 520f. The fourth inner edge 520f4 is continuous with the first inner edge 520f1 and the second inner edge 520f2 at the depressed section 520f. The fourth inner edge 520f4 is formed in an arcuate shape along the lateral direction Y. The fourth inner edge 520f4 is formed in a curved rectangular shape along the lateral direction Y and the height direction Z. The fourth inner edge 520f4 is formed in a relatively elongated shape along the lateral direction Y.

(Configuration of Safety Valve 530 According to Embodiment)

The configuration of the safety valve 530 according to the embodiment is explained with reference to FIG. 12 to FIG. 19.

The safety valve 530 ruptures outward from the battery 1 and makes the internal pressure of the battery 1 atmospheric pressure or reduces the internal pressure of the battery 1 when the internal pressure of the battery 1 has reached the predetermined value. The safety valve 530 is equivalent to a rupture valve. As depicted in FIG. 12, the safety valve 530 is provided to the lid 520. The safety valve 530 is formed integrally with the lid 520. That is, as with the lid 520, for example, the safety valve 530 is formed using aluminum or an aluminum alloy. The safety valve 530 may be formed by forming together with an outer frame that annularly encloses and supports the safety valve 530, and then inserting and joining the outer frame to a through-hole formed through the safety valve 530. The safety valve 530 may be formed by inserting and joining the safety valve 530 to a through-hole formed through the lid 520. The safety valve 530 may be provided to the vessel 510.

As depicted in FIG. 13, the safety valve 530 includes a middle section 531, one end section 532, and another end section 533. As depicted in FIG. 14 to FIG. 19, the middle section 531, the one end section 532, and the other end section 533 are curved in a projecting manner in a direction away from the charge/discharge body 100. The direction away from the charge/discharge body 100 is the upward direction in the height direction Z depicted in FIG. 12. The one end section 532 and the other end section 533 are formed in shapes that are symmetrical with respect to the middle section 531 along the longitudinal direction X.

As depicted in FIG. 13, the middle section 531 is formed in a rectangular shape at the depressed section 520f of the lid 520. The length d along the longitudinal direction X between one end 531p and another end 531q of the middle section 531 is set to be equal to or greater than 1 mm. With such settings, the safety valve 530 is provided with a rectangular portion in addition to a pair of arcuate portions. As depicted in FIG. 14 and FIG. 17, the middle section 531 extends along the longitudinal direction X and the lateral direction Y inside the depressed section 520f.

As depicted in FIG. 17 and FIG. 19, the middle section 531 includes a first groove 531a that is formed in a linear shape. The first groove 531a is a recessed section having a rectangular cross-section with the front side of the lid 520 being open. The first groove 531a is adjacent to the first inner edge 520f1 of the lid 520 at the middle section 531. The first groove 531a is formed in a recessed manner along the first inner edge 520f1 at the middle section 531 in a state where the first groove 531a is apart from the first inner edge 520f1 of the lid 520. The recessed depressed portion of the first groove 531a is exposed outside from the battery 1.

As depicted in FIG. 17 and FIG. 18, the middle section 531 includes a second groove 531b that is formed in a linear shape. The second groove 531b is a recessed section having a rectangular cross-section with the front side of the lid 520 being open. The second groove 531b is adjacent to the second inner edge 520f2 of the lid 520 at the middle section 531. The second groove 531b is formed in a recessed manner along the second inner edge 520f2 at the middle section 531 in a state where the second groove 531b is apart from the second inner edge 520f2 of the lid 520. The recessed depressed portion of the second groove 531b is exposed outside from the battery 1.

As depicted in FIG. 13, the one end section 532 is continuous with the one end 531p of the middle section 531 at the depressed section 520f of the lid 520. The one end section 532 is formed in an arcuate shape on the side of the one end 531p of the middle section 531 along the longitudinal direction X. The one end section 532 is formed in a semicircular shape with a diameter φ. As depicted in FIG. 14 and FIG. 17, the one end section 532 extends along the longitudinal direction X and the lateral direction Y inside the depressed section 520f.

As depicted in FIG. 14 and FIG. 15, the one end section 532 includes a third groove 532c that is formed in an arcuate shape. The third groove 532c is a recessed section having a rectangular cross-section with the front side of the lid 520 being open. The third groove 532c is continuous with the first groove 531a and the second groove 531b. The third groove 532c is adjacent to the third inner edge 520f3 of the lid 520 at the one end section 532. The third groove 532c is formed in a recessed manner along the third inner edge 520f3 at the one end section 532 in a state where the third groove 532c is apart from the third inner edge 520f3 of the lid 520. The recessed depressed portion of the third groove 532c is exposed outside from the battery 1.

As depicted in FIG. 13, the other end section 533 is continuous with the other end 531q of the middle section 531 at the depressed section 520f of the lid 520. The other end section 533 is formed in an arcuate shape on the side of the other end 531q of the middle section 531 along the longitudinal direction X. The other end section 533 is formed in a semicircular shape with a diameter φ. As depicted in FIG. 14, the other end section 533 extends along the longitudinal direction X and the lateral direction Y inside the depressed section 520f.

As depicted in FIG. 14 and FIG. 16, the other end section 533 includes a fourth groove 533d that is formed in an arcuate shape. The fourth groove 533d is a recessed section having a rectangular cross-section with the front side of the lid 520 being open. The fourth groove 533d is continuous with the first groove 531a and the second groove 531b. The fourth groove 533d is adjacent to the fourth inner edge 520f4 of the lid 520 at the other end section 533. The fourth groove 533d is formed in a recessed manner along the fourth inner edge 520f4 at the other end section 533 in a state where the fourth groove 533d is apart from the fourth inner edge 520f4 of the lid 520. The recessed depressed portion of the fourth groove 533d is exposed outside from the battery 1.

At the safety valve 530, as depicted in FIG. 14, the middle section 531, the one end section 532, and the other end section 533 are formed in a thin board shape along the longitudinal direction X and the lateral direction Y. The middle section 531, the one end section 532, and the other end section 533 are depressed from the side of the front surface 520a and the side of the back surface 520b of the lid 520 along the height direction Z. That is, the middle section 531, the one end section 532, and the other end section 533 are thinner than the lid 520. The middle section 531, the one end section 532, and the other end section 533 have the same thickness along the height direction Z. As depicted in FIG. 14, the depressed lengths of the middle section 531, the one end section 532, and the other end section 533 from the side of the front surface 520a of the lid 520 are relatively longer than the depressed lengths thereof from the side of the back surface 520b of the lid 520.

At the safety valve 530, the thickness of the first groove 531a is thicker than the thickness of the second groove 531b, the third groove 532c, and the fourth groove 533d. The first groove 531a has a uniform thickness from one end which is at the boundary with the third groove 532c to another end which is at the boundary with the fourth groove 533d. The second groove 531b, the third groove 532c, and the fourth groove 533d have a uniform thickness from an end section of the third groove 532c which is at the boundary with the first groove 531a to an end section of the fourth groove 533d which is at the boundary with the first groove 531a. Here, the thickness of grooves means the thickness of the bottoms of the recessed grooves. That is, the thickness of grooves is equivalent to the dimensions in the height direction Z from the bottoms of the grooves to the back surface of the safety valve 530. At the safety valve 530, the thickness of the second groove 531b, the third groove 532c, and the fourth groove 533d is set to be equal to or greater than 0.2 times and equal to or less than 0.7 times the thickness of the first groove 531a. For example, the thickness of the second groove 531b, the third groove 532c, and the fourth groove 533d is 80 μm or 120 μm. For example, the thickness of the first groove 531a is 200 μm.

As depicted in FIG. 6, the sealing plug 540 seals the liquid injection insertion hole 520e of the lid 520. The sealing plug 540 is formed in a columnar shape. As depicted in FIG. 12, the sealing plug 540 includes a head 540a having a relatively large outer diameter and the insertion section 540b that is continuous with the head 540a and has a relatively small outer diameter. The head 540a of the sealing plug 540 is welded to the lid 520. The insertion section 540b is inserted to the liquid injection insertion hole 520e. For example, the sealing plug 540 is formed using aluminum or an aluminum alloy.

The insulator 600 insulates constituent members of the battery 1 from the housing 500. The insulator 600 depicted in FIG. 2 to FIG. 5, FIG. 10, and FIG. 11 includes an insulating cover 610, the positive electrode side insulating board 620, and the negative electrode side insulating board 630.

The insulating cover 610 covers the charge/discharge body 100. The insulating cover 610 makes one side section 100a of the charge/discharge body 100 exposed outward, and covers portions other than the one side section 100a of the charge/discharge body 100. For example, the insulating cover 610 is formed in a pentahedral shape and folded in a box shape. For example, the insulating cover 610 is formed using polypropylene.

The positive electrode side insulating board 620 insulates the positive electrode current collecting board 210 and the conductive member 320 from the lid 520. The positive electrode side insulating board 620 includes a base section 620a in a rectangular parallelepiped board shape, the insertion hole 620b penetrating the base section 620a, and a projecting portion 620c that annularly encloses a side edge of the base section 620a and protrudes in a direction away from the lid 520. The positive electrode side insulating board 620 houses the positive electrode current collecting board 210, the conductive member 320, and the like in a space formed by the base section 620a and the projecting portion 620c. The insertion section 410b of the positive electrode terminal 410 is inserted to the insertion hole 620b. For example, the positive electrode side insulating board 620 is formed using insulating resin.

The negative electrode side insulating board 630 insulates the negative electrode current collecting board 220 from the lid 520. The negative electrode side insulating board 630 includes a base section 630a in a rectangular parallelepiped board shape, the insertion hole 630b penetrating the base section 630a, and a projecting portion 630c that annularly encloses a side edge of the base section 630a and protrudes in a direction away from the lid 520. The negative electrode side insulating board 630 houses the negative electrode current collecting board 220 in a space formed by the base section 630a and the projecting portion 630c. The insertion section 420b of the negative electrode terminal 420 is inserted to the insertion hole 630b. For example, the negative electrode side insulating board 630 is formed using insulating resin.

The sealing body 700 seals constituent members of the battery 1 and the housing 500. The sealing body 700 depicted in FIG. 2 to FIG. 5, FIG. 10, and FIG. 11 includes the positive electrode side first gasket 710, the positive electrode side second gasket 720, the negative electrode side first gasket 730, and the negative electrode side second gasket 740.

The positive electrode side first gasket 710 seals the positive electrode current collecting board 210 and the lid 520 and seals up the housing 500. The positive electrode side first gasket 710 is formed in a cylindrical shape. As depicted in FIG. 11, the positive electrode side first gasket 710 includes a first insertion section 710a having a relatively large outer diameter, a second insertion section 710b that is continuous with the first insertion section 710a and has a relatively small outer diameter, and an insertion hole 710c penetrating the first insertion section 710a and the second insertion section 710b. As depicted in FIG. 5, the positive electrode side first gasket 710 is provided between the positive electrode terminal 410 and the positive electrode current collecting board 210. The first insertion section 710a is inserted to the insertion hole 620b of the positive electrode side insulating board 620 depicted in FIG. 11. The second insertion section 710b is inserted to the positive electrode insertion hole 520c of the lid 520 and the insertion hole 720b of the positive electrode side second gasket 720 depicted in FIG. 11. The insertion section 410b of the positive electrode terminal 410 depicted in FIG. 11 is inserted to the insertion hole 710c. For example, the positive electrode side first gasket 710 is formed using insulative and elastic rubber.

The positive electrode side second gasket 720 seals the positive electrode terminal 410 and the lid 520. As depicted in FIG. 11, the positive electrode side second gasket 720 includes the base section 720a in a rectangular parallelepiped board shape, the insertion hole 720b penetrating the base section 720a, and a projecting portion 720c that annularly encloses a side edge of the base section 720a and protrudes in a direction away from the lid 520. The positive electrode side second gasket 720 houses the positive electrode terminal 410 in a space formed by the base section 720a and the projecting portion 720c. The insertion section 410b of the positive electrode terminal 410 is inserted to the insertion hole 720b. For example, the positive electrode side second gasket 720 is formed using insulating resin.

The negative electrode side first gasket 730 seals the negative electrode current collecting board 220 and the lid 520 and seals up the housing 500. The negative electrode side first gasket 730 is formed in a cylindrical shape. As depicted in FIG. 10, the negative electrode side first gasket 730 includes a first insertion section 730a having a relatively large outer diameter, a second insertion section 730b that is continuous with the first insertion section 730a and has a relatively small outer diameter, and an insertion hole 730c penetrating the first insertion section 730a and the second insertion section 730b. As depicted in FIG. 3, the negative electrode side first gasket 730 is provided between a second member 422 of the negative electrode terminal 420 and the negative electrode current collecting board 220. The first insertion section 730a is inserted to the insertion hole 630b of the negative electrode side insulating board 630 depicted in FIG. 10. The second insertion section 730b is inserted to the negative electrode insertion hole 520d of the lid 520 and the insertion hole 740b of the negative electrode side second gasket 740 depicted in FIG. 10. A body section 421b of a first member 421 of the negative electrode terminal 420 depicted in FIG. 10 is inserted to the insertion hole 730c. For example, the negative electrode side first gasket 730 is formed using insulative and elastic rubber.

The negative electrode side second gasket 740 seals the negative electrode terminal 420 and the lid 520. As depicted in FIG. 10, the negative electrode side second gasket 740 includes the base section 740a in a rectangular parallelepiped board shape, the insertion hole 740b penetrating the base section 740a, and a projecting portion 740c that annularly encloses a side edge of the base section 740a and protrudes in a direction away from the lid 520. The negative electrode side second gasket 740 houses the negative electrode terminal 420 in a space formed by the base section 740a and the projecting portion 740c. The insertion section 420b of the negative electrode terminal 420 is inserted to the insertion hole 740b. For example, the negative electrode side second gasket 740 is formed using insulating resin.

(Basis for Simulation of Safety Valve 530 According to Embodiment)

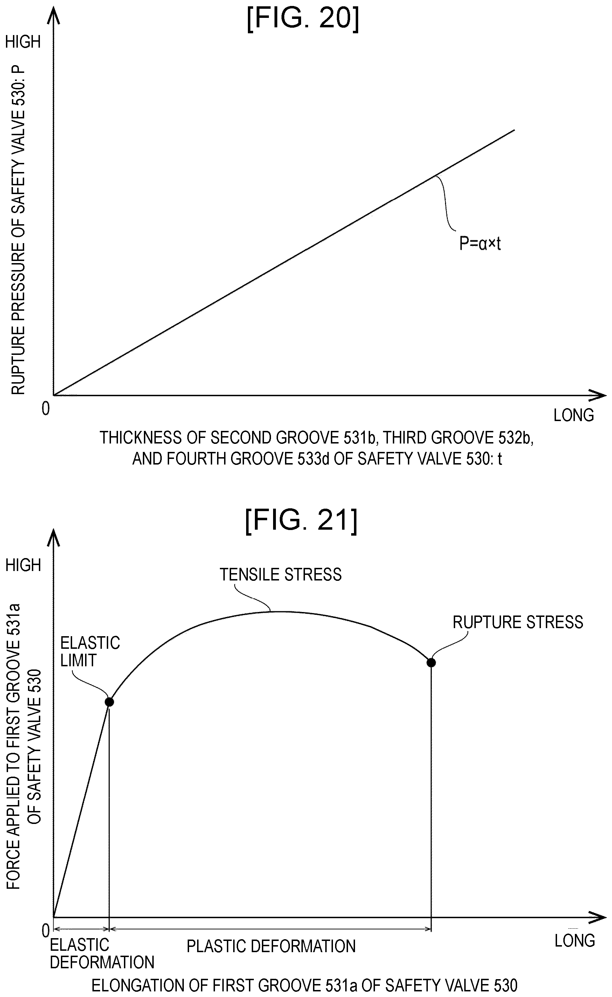

The basis for simulation of the safety valve 530 according to the embodiment is explained with reference to Math. 1 to Math. 6, FIG. 20, and FIG. 21.

FIG. 20 is a schematic diagram depicting a relation between the rupture pressure of the safety valve 530: P and the thickness of the second groove 531b, the third groove 532b, and the fourth groove 533d of the safety valve 530: t. FIG. 21 is a schematic diagram depicting a relation between the force applied to the first groove 531a of the safety valve 530 and the elongation of the first groove 531a of the safety valve 530.

The simulation of the safety valve 530 according to the embodiment was executed on the basis of the following calculation formula.

[Math. 1]

```
S = AREA OF SAFETY VALVE 530

  = AREA OF MIDDLE SECTION 531 + AREA OF ONE END SECTION 532

+ AREA 533 OF OTHER END SECTION

  = d×2r + (π×r²)/2 + (π×r²)/2

  = d×Φ + (π×(Φ/2)²)/2 + (π×(Φ/2)²)/2

  = d×Φ + π×(Φ/2)²
```

S: AREA OF SAFETY VALVE 530
d: LENGTH IN LONGITUDINAL DIRECTION X OF MIDDLE SECTION 531 (LENGTH OF FIRST GROOVE 531a)
r: RADIUS OF ONE END SECTION 532 AND OTHER END SECTION 533
Φ: DIAMETER OF ONE END SECTION 532 AND OTHER END SECTION 533, LENGTH IN LATERAL DIRECTION Y OF MIDDLE SECTION 531

S in Math. 1 represents the area of the safety valve 530. The safety valve 530 is curved in a projecting manner along the height direction Z toward the side away from the charge/discharge body 100. In Math. 1, the area of the safety valve 530 is approximated to the area on the plane constituted by the longitudinal direction X and the lateral direction Y. In Math. 1, the area of the safety valve 530 is the sum of the area of the middle section 531, the area of the one end section 532, and the area of the other end section 533. The middle section 531 has a rectangular shape. The area of the middle section 531 is represented by $d \times 2r$. That is, the area of the middle section 531 is represented by $d \times \Phi$. Each of the one end section 532 and the other end section 533 has a semicircular shape. Each of the area of the one end section 532 and the area of the other end section 533 is represented by $(\pi \times r^2)/2$. That is, each of the area of the one end section 532 and the area of the other end section 533 is represented by $(\pi \times (\Phi/2)^2)/2$. As a result, the area of the safety valve 530 is represented by $d \times \Phi + \pi \times (\Phi/2)^2$.

[Math. 2]

$$F = S \times P$$
$$= S \times \alpha \times t$$

F: FORCE APPLIED TO SAFETY VALVE 530 IMMEDIATELY BEFORE RUPTURE
P: RUPTURE PRESSURE OF SAFETY VALVE 530
α: FIRST COEFFICIENT
t: THICKNESS OF SECOND GROOVE 531b, THIRD GROOVE 532c, AND FOURTH GROOVE 533d TO BE MADE TO RUPTURE

F in Math. 2 represents the force applied to the safety valve 530 immediately before rupture due to the internal pressure of the battery 1 received from the side of the charge/discharge body 100. F is defined by $S \times P$. P is the rupture pressure of the safety valve 530 depicted in FIG. 20. P is defined by $\alpha \times t$. That is, $F = S \times \alpha \times t$. $\alpha$ is a first coefficient. $\alpha$ is a value reflecting the rigidity or the like of a groove to be made to rupture of the safety valve 530. t is the thickness of the second groove 531b, the third groove 532c, and the fourth groove 533d of the safety valve 530.

[Math. 3]

$$F' = \beta \times F$$

F': FORCE APPLIED TO SAFETY VALVE 530 IMMEDIATELY AFTER RUPTURE
β: SECOND COEFFICIENT

F' in Math. 3 represents the force applied to the safety valve 530 immediately after rupture due to the internal pressure of the battery 1 received from the side of the charge/discharge body 100. F' is defined by $\beta \times F$. $\beta$ is a second coefficient. $\beta$ is a predetermined value reflecting a state where the safety valve 530 receives pressure from the charge/discharge body 100 in a state where the second groove 531b, the third groove 532c, and the fourth groove 533d of the safety valve 530 are separated from the depressed section 520f of the lid 520 and the first groove 531a is retained at the depressed section 520f of the lid 520. In a state where only the first groove 531a is retained at the lid 520, the safety valve 530 receives the internal pressure of the battery 1 from the side of the charge/discharge body 100 depending on the area represented by S in Math. 1. $\beta$ is a value smaller than 1 and greater than 0.

$$[\text{Math. 4}]$$

$$\sigma = F'/(t' \times d)$$

$\sigma$: SHEAR STRESS APPLIED TO FIRST GROOVE 531a OF SAFETY VALVE 530
t': THICKNESS OF FIRST GROOVE 531a TO BE RETAINED
d: LENGTH OF FIRST GROOVE 531a TO BE RETAINED

$\sigma$ in Math. 4 represents the shear force applied to the first groove 531a of the safety valve 530 due to the internal pressure of the battery 1 received from the side of the charge/discharge body 100. $\sigma$ is defined by F'/(t'×d). t' is the thickness of the first groove 531a that is to be retained at the depressed section 520f of the lid 520 when the safety valve 530 ruptures. d is the length of the first groove 531a along the longitudinal direction X.

$$[\text{Math. 5}]$$

CONDITION UNDER WHICH SAFETY VALVE 530 IS

RETAINED AT LID 520

(CONDITION UNDER WHICH FIRST GROOVE 531a OF

SAFETY VALVE 530 DOES NOT SHEAR OFF FROM

DEPRESSED SECTION 520f OF LID 520)

$$\sigma_{min} = \text{ELASTIC LIMIT} \times 0.7 < \sigma = F'/(t' \times d) < \sigma_{max} = \text{TENSILE STRESS} \times 0.7$$

$$= \beta \times F/(t' \times d)$$

$$= \beta \times S \times \alpha \times t/(t' \times d)$$

CONDITION UNDER WHICH SAFETY VALVE 530

STANDS UP FROM LID 520

(CONDITION UNDER WHICH FIRST GROOVE 531a

OF SAFETY VALVE 530 PLASTICALLY DEFORMS

AT DEPRESSED SECTION 520f OF LID 520)

Math. 5 represents the condition under which the safety valve 530 is retained at the lid 520 and the condition under which the safety valve 530 stands up from the lid 520. The minimum value $\sigma_{min}$ of plastic deformation of the safety valve 530 is defined by 0.7 times the elastic limit depicted in FIG. 21. The condition under which the safety valve 530 plastically deforms is that $\sigma_{min} < \sigma$ is satisfied. The condition under which the safety valve 530 stands up from the lid 520 is equivalent to the condition under which the first groove 531a of the safety valve 530 plastically deforms at the depressed section 520f of the lid 520. The maximum value $\sigma_{max}$ of shear force of the safety valve 530 is defined by 0.7 times the tensile stress depicted in FIG. 21. The condition under which the safety valve 530 is retained at the lid 520, that is, the safety valve 530 does not come out of the lid 520, is that $\sigma < \sigma_{max}$ is satisfied. The condition under which the safety valve 530 is retained at the lid 520 is equivalent to the condition under which the first groove 531a of the safety valve 530 does not shear off from the depressed section 520f of the lid 520.

[Math. 6]

CONDITION UNDER WHICH SAFETY VALVE 530 IS

RETAINED AT LID 520

(CONDITION UNDER WHICH FIRST GROOVE 531a OF

SAFETY VALVE 530 DOES NOT SHEAR OFF FROM

DEPRESSED SECTION 520f OF LID 520)

$$\underbrace{\text{ELASTIC LIMIT} \times 0.7 \times d/(\beta \times S \times \alpha)}_{\substack{\text{CONDITION UNDER WHICH SAFETY VALVE 530} \\ \text{STANDS UP FROM LID 520} \\ \text{(CONDITION UNDER WHICH FIRST GROOVE 531a} \\ \text{OF SAFETY VALVE 530 PLASTICALLY DEFORMS} \\ \text{AT DEPRESSED SECTION 520f OF LID 520)}} < t/t' < \text{TENSILE STRESS} \times 0.7 \times d/(\beta \times S \times \alpha)$$

On the basis of Math. 5, Math. 6 represents the condition under which the safety valve 530 is retained at the lid 520 and the condition under which the safety valve 530 stands up from the lid 520, on the basis of the ratio of t/t'. Math. 6 is obtained by multiplying each of mathematical expressions in Math. 5 by $d/(\beta \times S \times \alpha)$.

(Examination 1 of Safety Valve 530 According to Embodiment)

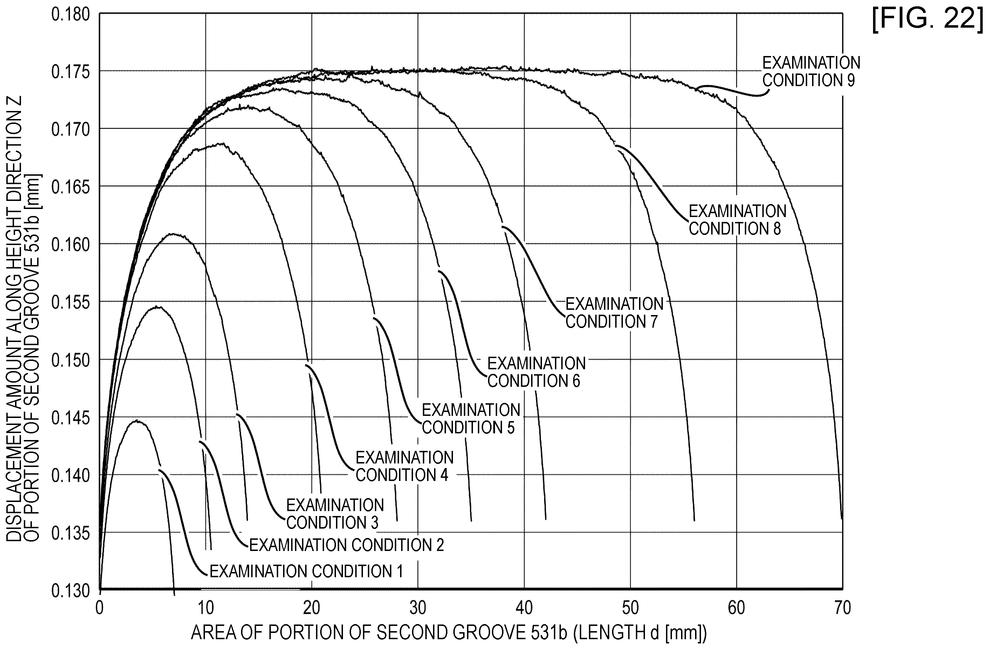

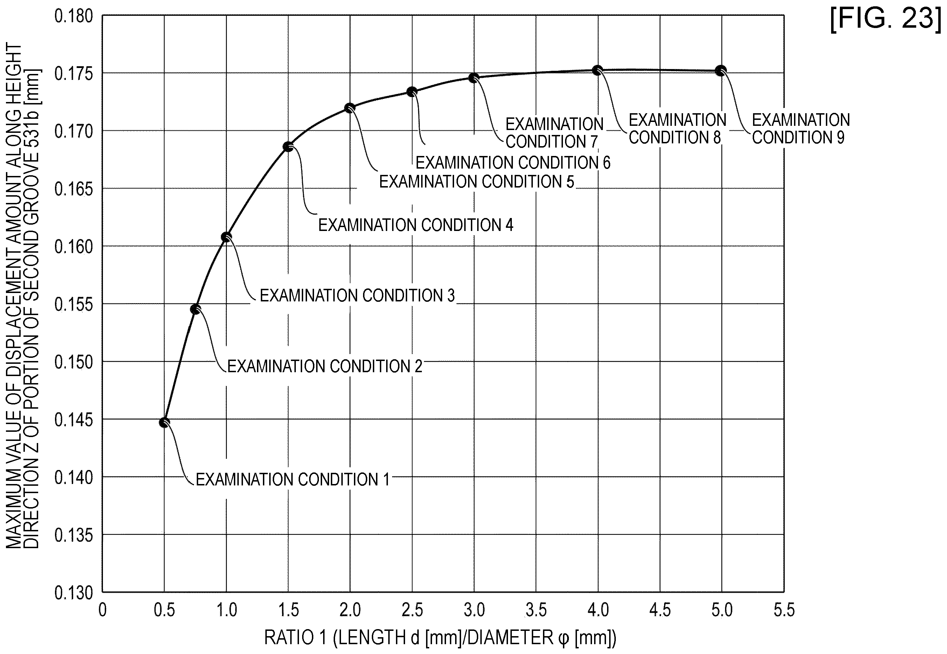

Examination 1 of the safety valve 530 according to the embodiment is explained with reference to Table 1, FIG. 22, and FIG. 23.
Table 1 represents the examination conditions, examination parameters, examination methods, and examination results of simulation related to rupture of the safety valve 530.

[Table 1]

| EXAMINATION | CONDITIONS | 1 | 2 | 3 | 4 | 5 | 6 | 7 | 8 | 9 |
|---|---|---|---|---|---|---|---|---|---|---|
| EXAMINATION PARAMETERS | LENGTH d OF MIDDLE SECTION 531 [mm] | 7 | 10.5 | 14 | 21 | 28 | 35 | 42 | 56 | 70 |
| | DIAMETER φ OF ONE END SECTION 532 AND OTHER END SECTION 533 [mm] | 14 | 14 | 14 | 14 | 14 | 14 | 14 | 14 | 14 |
| | LENGTH d/DIAMETER φ *RATIO 1 | 0.5 | 0.75 | 1.0 | 1.5 | 2.0 | 2.5 | 3.0 | 4.0 | 5.0 |
| EXAMINATION METHODS | SIMULATION | ✓ | ✓ | ✓ | ✓ | ✓ | ✓ | ✓ | ✓ | ✓ |
| EXAMINATION | STARTING AREA OF | ◎ | ◎ | ◎ | ○ | ○ | Δ | Δ | × | × |

14

(continued)

| EXAMINATION | CONDITIONS | 1 | 2 | 3 | 4 | 5 | 6 | 7 | 8 | 9 |
|---|---|---|---|---|---|---|---|---|---|---|
| RESULTS | RUPTURE OF SAFETY VALVE 530 | | | | | | | | | |

* STARTING AREA OF RUPTURE OF SAFETY VALVE 530
◎: EXTREMELY SMALL (DOT-LIKE)
○: SMALL
△: MODERATELY LARGE
×: LARGE (LINEAR)

FIG. 22 is a graph depicting simulation results of the displacement area and displacement amount of the second groove 531b of the safety valve 530 under Condition 1 to Condition 9 in Table 1. FIG. 23 is a graph depicting simulation results of the maximum value of the displacement area of the second groove 531b of the safety valve 530 under Condition 1 to Condition 9 in Table 1.

The horizontal axis in FIG. 22 represents the length d [mm] of the portion of the second groove 531b at the middle section 531 of the safety valve 530. The vertical axis in FIG. 22 represents the displacement amount [mm] along the height direction Z of the portion of the second groove 531b at the middle section 531 of the safety valve 530. The displacement amount along the height direction Z of the portion of the second groove 531b is the length by which the portion of the second groove 531b deforms in the upward direction in the height direction Z as a result of the safety valve 530 receiving pressure.

In Table 1, the starting area of rupture of the safety valve 530 is an area where the displacement amount at the second groove 531b of the safety valve 530 is the greatest. Upon receiving a predetermined pressure, the safety valve 530 starts rupture from the area where the displacement amount at the second groove 531b is the greatest as the starting point. The possibility that the starting position of rupture of the safety valve 530 is stabilized at the middle of the second groove 531b and is positionally consistent increases as the starting area of rupture decreases in size. As a result, the safety valve 530 easily ruptures in accordance with its specifications. On the other hand, the possibility that the starting position of rupture of the safety valve 530 is off the middle of the second groove 531b and is positionally inconsistent increases as the starting area of rupture increases in size. That is, the starting position of rupture of the safety valve 530 at the second groove 531b tends to become indeterminate as the starting area of rupture increases in size. In this case, it becomes unlikely for the safety valve 530 to rupture in accordance with its specifications, and there is a fear that the safety valve 530 ruptures partially.

In the simulation, the external shape of the safety valve 530 was designed by 3D CAD software, and thereafter deformations of the safety valve 530 were analyzed by predetermined stress analysis software.

Under Examination Condition 1, as depicted in Table 1, the length d1 of the middle section 531 is 7 mm, and the diameter φ of the one end section 532 and the other end section 533 is 14 mm. The diameter φ is defined assuming that each of the one end section 532 and the other end section 533 has a semicircular shape. The ratio obtained by dividing the length d by the diameter φ is defined as a ratio 1. The ratio 1 under Examination Condition 1 is 0.5 (7 mm/14 mm). Under Examination Condition 1, as depicted in FIG. 22, the displacement amount of the portion of the second groove 531b of the safety valve 530 is the smallest at both ends (0 mm and 7 mm along the horizontal axis) of the second groove 531b and is the greatest at the middle (3.5 mm along the horizontal axis) of the second groove 531b. The displacement amount of the portion of the second groove 531b of the safety valve 530 is the greatest at the middle (3.5 mm along the horizontal axis) of the second groove 531b and the smallest at both ends (0 mm and 7 mm along the horizontal axis) of the second groove 531b. Under Examination Condition 1, as depicted in FIG. 22, the area where the displacement amount at the second groove 531b is the greatest is an area that is positioned at the middle of the second groove 531b and is very small along the longitudinal direction X. That is, the area where the displacement amount at the second groove 531b is the greatest is formed in a dot-like shape at the middle of the second groove 531b. The area where the displacement amount at the second groove 531b is the greatest is equivalent to a pointed upper end area in an inverted U-shaped graph related to Examination Condition 1.

In the embodiment, the very small area means an area with the displacement amount at the second groove 531b which falls within, for example, ±1 mm along the longitudinal direction X from the middle of the second groove 531b when it is assumed that the area where the displacement amount at the second groove 531b is the greatest is defined as an area with, for example, the top few percent of displacement amounts at the second groove 531b. Such a definition of the area is an example in the embodiment.

Under Examination Condition 1, when a pressure exceeding the predetermined value is applied to the safety valve 530, with the middle of the second groove 531b of the middle section 531 as the starting point of rupture, rupture of the safety valve 530 propagates evenly and promptly toward both ends of the second groove 531b. That is, with the very small area at the middle of the second groove 531b of the middle section 531 as the starting point of rupture, rupture propagates evenly and promptly toward both ends of the second groove 531b. Further, under Examination Condition 1, rupture of the safety valve 530 propagates evenly and promptly from both ends of the middle section 531 toward the third groove 532c of the one end section 532 and the fourth groove 533d of the other end section 533.

Under Examination Condition 2, as depicted in Table 1, the length d1 of the middle section 531 is 10.5 mm, and the diameter φ of the one end section 532 and the other end section 533 is 14 mm. The ratio 1 under Examination Condition 2 is 0.75 (10.5 mm/14 mm). Under Examination Condition 2, as depicted in FIG. 22, the displacement amount of the portion of the second groove 531b of the safety valve 530 is the greatest at the middle (5.25 mm along the horizontal axis) of the second groove 531b and the smallest at both ends (0 mm and 10.5 mm along the horizontal axis) of the second groove 531b. Under Examination Condition 2, as depicted in FIG. 22, the area where the displacement amount at the second groove 531b is the greatest is an area that is positioned at the middle of the second groove 531b and is very small along the longitudinal direction X. The area where the displacement amount at the second groove 531b is the greatest is equivalent to a pointed upper end area in an inverted U-shaped graph related to Examination Condition 2.

Under Examination Condition 2, when a pressure exceeding the predetermined value is applied to the safety valve 530, with the very small area at the middle of the second groove 531b of the middle section 531 as the starting point of rupture, rupture of the safety valve 530 propagates evenly and promptly toward both ends of the second groove 531b. Further, under Examination Condition 2, rupture of the safety valve 530 propagates evenly and promptly from both ends of the middle section 531 toward the third groove 532c of the one end section 532 and the fourth groove 533d of the other end section 533.

Under Examination Condition 3, as depicted in Table 1, the length d1 of the middle section 531 is 14 mm, and the diameter φ of the one end section 532 and the other end section 533 is 14 mm. The ratio 1 under Examination Condition 3 is 1.0 (14 mm/14 mm). Under Examination Condition 3, as depicted in FIG. 22, the displacement amount of the portion of the second groove 531b of the safety valve 530 is the greatest at the middle (7 mm along the horizontal axis) of the second groove 531b and the smallest at both ends (0 mm and 14 mm along the horizontal axis) of the second groove 531b. Under Examination Condition 3, as depicted in FIG. 22, the area where the displacement amount at the second groove 531b is the greatest is an area that is positioned at the middle of the second groove 531b and is very small along the longitudinal direction X. The area where the displacement amount at the second groove 531b is the greatest is equivalent to a pointed upper end area in an inverted U-shaped graph related to Examination Condition 3.

Under Examination Condition 3, when a pressure exceeding the predetermined value is applied to the safety valve 530, with the very small area at the middle of the second groove 531b of the middle section 531 as the starting point of rupture, rupture of the safety valve 530 propagates evenly and promptly toward both ends of the second groove 531b. Further, under Examination Condition 3, rupture of the safety valve 530 propagates evenly and promptly from both ends of the middle section 531 toward the third groove 532c of the one end section 532 and the fourth groove 533d of the other end section 533.

Under Examination Condition 4, as depicted in Table 1, the length d1 of the middle section 531 is 21 mm, and the diameter φ of the one end section 532 and the other end section 533 is 14 mm. The ratio 1 under Examination Condition 4 is 1.5 (21 mm/14 mm). Under Examination Condition 4, as depicted in FIG. 22, the displacement amount of the portion of the second groove 531b of the safety valve 530 is the greatest at the middle (10.5 mm along the horizontal axis) of the second groove 531b and the smallest at both ends (0 mm and 21 mm along the horizontal axis) of the second groove 531b. Under Examination Condition 4, as depicted in FIG. 22, the area where the displacement amount at the second groove 531b is the greatest is an area that is positioned at the middle of the second groove 531b and is small along the longitudinal direction X. The area where the displacement amount at the second groove 531b is the greatest is equivalent to a slightly pointed upper end area in an inverted U-shaped graph related to Examination Condition 4.

In the embodiment, the small area means an area with the displacement amount at the second groove 531b which falls within, for example, ±2 mm along the longitudinal direction X from the middle of the second groove 531b when it is assumed that the area where the displacement amount at the second groove 531b is the greatest is defined as an area with, for example, the top few percent of displacement amounts at the second groove 531b. Such a definition of the area is an example in the embodiment.

Under Examination Condition 4, when a pressure exceeding the predetermined value is applied to the safety valve 530, with the small area at the middle of the second groove 531b of the middle section 531 as the starting point of rupture, rupture of the safety valve 530 propagates toward both ends of the second groove 531b. Further, under Examination Condition 4, rupture of the safety valve 530 propagates from both ends of the middle section 531 toward the third groove 532c of the one end section 532 and the fourth groove 533d of the other end section 533.

Under Examination Condition 5, as depicted in Table 1, the length d1 of the middle section 531 is 28 mm, and the diameter φ of the one end section 532 and the other end section 533 is 14 mm. The ratio 1 under Examination Condition 5 is 2.0 (28 mm/14 mm). Under Examination Condition 5, as depicted in FIG. 22, the displacement amount of the portion of the second groove 531b of the safety valve 530 is the greatest at the middle (14 mm along the horizontal axis) of the second groove 531b and the smallest at both ends (0 mm and 28 mm along the horizontal axis) of the second groove 531b. Under Examination Condition 5, as depicted in FIG. 22, the area where the displacement amount at the second groove 531b is the greatest is an area that is positioned at the middle of the second groove 531b and is small along the longitudinal direction X. The area where the displacement amount at the second groove 531b is the greatest is equivalent to a slightly pointed upper end area in an inverted U-shaped graph related to Examination Condition 5.

Under Examination Condition 5, when a pressure exceeding the predetermined value is applied to the safety valve 530, with the small area at the middle of the second groove 531b of the middle section 531 as the starting point of rupture, rupture of the safety valve 530 propagates toward both ends of the second groove 531b. Further, under Examination Condition 5, rupture of the safety valve 530 propagates from both ends of the middle section 531 toward the third groove 532c of the one end section 532 and the fourth groove 533d of the other end section 533.

Under Examination Condition 6, as depicted in Table 1, the length d1 of the middle section 531 is 35 mm, and the diameter φ of the one end section 532 and the other end section 533 is 14 mm. The ratio 1 under Examination Condition 6 is 2.5 (35 mm/14 mm). Under Examination Condition 6, as depicted in FIG. 22, the displacement amount of the portion of the second groove 531b of the safety valve 530 is the greatest at the middle (17.5 mm along the horizontal axis) of the second groove 531b and the smallest at both ends (0 mm and 35 mm along the horizontal axis) of the second groove 531b. Under Examination Condition 6, as depicted in FIG. 22, the area where the displacement amount at the second groove 531b is the greatest is an area that is positioned at the middle of the second groove 531b and is moderately large along the longitudinal direction X. The area where the displacement amount at the second groove 531b is the greatest is equivalent to a slightly flat upper end area in an inverted U-shaped graph related to Examination Condition 6.

In the embodiment, the slightly flat upper end area means an area with the displacement amount at the second groove 531b which falls within, for example, ±10 mm along the longitudinal direction X from the middle of the second groove 531b when it is assumed that the area where the displacement amount at the second groove 531b is the greatest is defined as an area with, for example, the top few percent of displacement amounts at the second groove 531b. Such a definition of the area is an example in the embodiment.

Under Examination Condition 6, when a pressure exceeding the predetermined value is applied to the safety valve 530, with a certain position in the moderately large area at the middle of the second groove 531b of the middle section 531 as the starting point of rupture, rupture of the safety valve 530 propagates toward both ends of the second groove 531b. That is, under Examination Condition 6, the middle of the second groove 531b does not necessarily become the starting point of rupture, and, with a portion apart from the middle of the second groove 531b as the starting point of rupture, rupture of the safety valve 530 unevenly propagates toward both ends of the second groove 531b in some cases. Further, under Examination Condition 6, rupture of the safety valve 530 propagates from both ends of the middle section 531 toward the third groove 532c of the one end section 532 and the fourth groove 533d of the other end section 533. There is a possibility that rupture of the second groove 531b of the middle section 531 ends before rupture of the third groove 532c of the one end section 532 and the fourth groove 533d of the other end section 533 starts.

Under Examination Condition 7, as depicted in Table 1, the length d1 of the middle section 531 is 42 mm, and the diameter φ of the one end section 532 and the other end section 533 is 14 mm. The ratio 1 under Examination Condition 7 is 3.0 (42 mm/14 mm). Under Examination Condition 7, as depicted in FIG. 22, the displacement amount of the portion of the second groove 531b of the safety valve 530 is the greatest at the middle (21.0 mm along the horizontal axis) of the second groove 531b and the smallest at both ends (0 mm and 42 mm along the horizontal axis) of the second groove 531b. Under Examination Condition 7, as depicted in FIG. 22, the area where the displacement amount at the second groove 531b is the greatest is an area that is positioned at the middle of the second groove 531b and is moderately large along the longitudinal direction X. The area where the displacement amount at the second groove 531b is the greatest is equivalent to a slightly flat upper end area in an inverted U-shaped graph related to Examination Condition 7.

Under Examination Condition 7, when a pressure exceeding the predetermined value is applied to the safety valve 530, with a certain position in the moderately large area at the middle of the second groove 531b of the middle section 531 as the starting point of rupture, rupture of the safety valve 530 propagates toward both ends of the second groove 531b. That is, under Examination Condition 7, the middle of the second groove 531b does not necessarily become the starting point of rupture, and, with a portion apart from the middle of the second groove 531b as the starting point of rupture, rupture of the safety valve 530 unevenly propagates toward both ends of the second groove 531b in some cases. Further, under Examination Condition 7, rupture of the safety valve 530 propagates from both ends of the middle section 531 toward the third groove 532c of the one end section 532 and the fourth groove 533d of the other end section 533. There is a possibility that rupture of the second groove 531b of the middle section 531 ends before rupture of the third groove 532c of the one end section 532 and the fourth groove 533d of the other end section 533 starts.

Under Examination Condition 8, as depicted in Table 1, the length d1 of the middle section 531 is 56 mm, and the diameter φ of the one end section 532 and the other end section 533 is 14 mm. The ratio 1 under Examination Condition 8 is 4.0 (56 mm/14 mm). Under Examination Condition 8, as depicted in FIG. 22, the displacement amount of the portion of the second groove 531b of the safety valve 530 is the greatest at the middle (28 mm along the horizontal axis) of the second groove 531b and the smallest at both ends (0 mm and 56 mm along the horizontal axis) of the second groove 531b. Under Examination Condition 8, as depicted in FIG. 22, the area where the displacement amount at the second groove 531b is the greatest is an area that is positioned at the middle of the second groove 531b and is large along the longitudinal direction X.

The large area is equivalent not to a dot-like area but to a linear area. The area where the displacement amount at the second groove 531b is the greatest is equivalent to a flat upper end area in an inverted U-shaped graph related to Examination Condition 8.

In the embodiment, the flat upper end area means an area with the displacement amount at the second groove 531b which exceeds, for example, $\pm 10$ mm along the longitudinal direction X from the middle of the second groove 531b when it is assumed that the area where the displacement amount at the second groove 531b is the greatest is defined as an area with, for example, the top few percent of displacement amounts at the second groove 531b. Such a definition of the area is an example in the embodiment.

Under Examination Condition 8, when a pressure exceeding the predetermined value is applied to the safety valve 530, with a certain position in the large area at the middle of the second groove 531b of the middle section 531 as the starting point of rupture, rupture of the safety valve 530 propagates toward both ends of the second groove 531b. That is, under Examination Condition 8, the middle of the second groove 531b does not necessarily become the starting point of rupture, and, with a portion significantly apart from the middle of the second groove 531b as the starting point of rupture, rupture of the safety valve 530 significantly unevenly propagates toward both ends of the second groove 531b in some cases. Further, under Examination Condition 8, rupture of the safety valve 530 propagates from both ends of the middle section 531 toward the third groove 532c of the one end section 532 and the fourth groove 533d of the other end section 533. Rupture of the second groove 531b of the middle section 531 is likely to end before rupture of the third groove 532c of the one end section 532 and the fourth groove 533d of the other end section 533 starts.

Under Examination Condition 9, as depicted in Table 1, the length d1 of the middle section 531 is 70 mm, and the diameter $\varphi$ of the one end section 532 and the other end section 533 is 14 mm. The ratio 1 under Examination Condition 9 is 5.0 (70 mm/14 mm). Under Examination Condition 9, as depicted in FIG. 22, the displacement amount of the portion of the second groove 531b of the safety valve 530 is the greatest at the middle (35 mm along the horizontal axis) of the second groove 531b and the smallest at both ends (0 mm and 70 mm along the horizontal axis) of the second groove 531b. Under Examination Condition 9, as depicted in FIG. 22, the area where the displacement amount at the second groove 531b is the greatest is an area that is positioned at the middle of the second groove 531b and is large along the longitudinal direction X. The large area is equivalent not to a dot-like area but to a linear area. The area where the displacement amount at the second groove 531b is the greatest is equivalent to a flat upper end area in an inverted U-shaped graph related to Examination Condition 9.

Under Examination Condition 9, when a pressure exceeding the predetermined value is applied to the safety valve 530, with a certain position in the large area at the middle of the second groove 531b of the middle section 531 as the starting point of rupture, rupture of the safety valve 530 propagates toward both ends of the second groove 531b. That is, under Examination Condition 9, the middle of the second groove 531b does not necessarily become the starting point of rupture, and, with a portion significantly apart from the middle of the second groove 531b as the starting point of rupture, rupture of the safety valve 530 significantly unevenly propagates toward both ends of the second groove 531b in some cases. Further, under Examination Condition 9, rupture of the safety valve 530 propagates from both ends of the middle section 531 toward the third groove 532c of the one end section 532 and the fourth groove 533d of the other end section 533. Rupture of the second groove 531b of the middle section 531 is likely to end before rupture of the third groove 532c of the one end section 532 and the fourth groove 533d of the other end section 533 starts.

From Examination Condition 1 to Examination Condition 9, the ratio 1 related to length d/diameter $\Phi$ is changed from 0.5 to 5.0. The length d is defined as the length of the portion of the second groove 531b at the middle section 531 of the safety valve 530. The diameter $\varphi$ is defined assuming that each of the one end section 532 and the other end section 533 has a semicircular shape. As depicted in FIG. 23, along with the increase in the ratio 1 from 0.5 to 5.0, the displacement amount along the height direction Z of the portion of the second groove 531b at the middle section 531 of the safety valve 530 increases. The increase in the displacement amount of the second groove 531b is saturated when the ratio 1 is approximately 3.0.

(Examination 2 of Safety Valve 530 According to Embodiment)

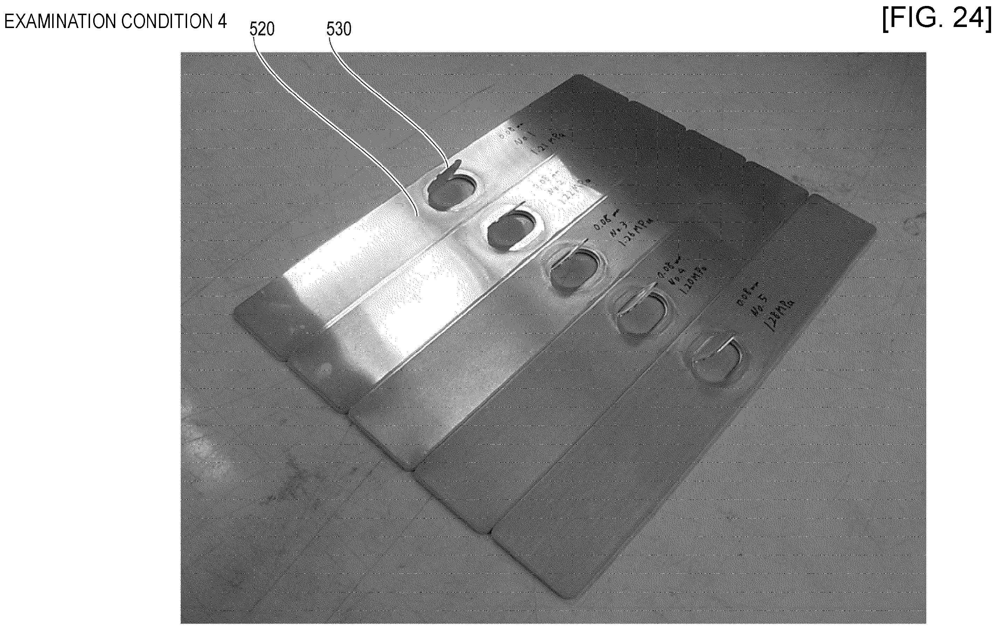

Examination 2 of the safety valve 530 according to the embodiment is explained with reference to Table 2 and FIG. 24 to FIG. 27.

Table 2 represents the examination conditions, examination parameters, examination methods, and examination results of simulation experiment related to the likelihood of being retained and the likelihood of standing up of the safety valve 530.

[Table 2]

| EXAMINATION CONDITIONS | | 11 | 12 | 13 | 14 | 15 | 16 | 17 | 18 | 19 |
|---|---|---|---|---|---|---|---|---|---|---|
| EXAMINATION PARAMETERS | THICKNESS t OF SECOND GROOVE 531b, THIRD GROOVE 532c, AND FOURTH GROOVE 533d [$\mu$m] | 20 | 40 | 60 | 80 | 100 | 120 | 140 | 150 | 175 |
| | THICKNESS t' OF FIRST GROOVE 531a [$\mu$m] | 200 | 200 | 200 | 200 | 200 | 200 | 200 | 200 | 200 |
| | t/t' *RATIO 2 | 0.1 | 0.2 | 0.3 | 0.4 | 0.5 | 0.6 | 0.7 | 0.75 | 0.88 |
| EXAMINATION METHODS | SIMULATION | ✓ | ✓ | ✓ | ✓ | ✓ | ✓ | ✓ | ✓ | ✓ |
| | EXPERIMENT | - | - | - | ✓ | - | ✓ | - | - | - |
| EXAMINATION RESULTS | LIKELIHOOD OF BEING RETAINED OF SAFETY VALVE 530 | ◎ | ◎ | ◎ | ◎ | ◎ | ○ | △ | × | × |
| | LIKELIHOOD OF STANDING UP OF SAFETY VALVE 530 | × | △ | ○ | ◎ | ◎ | ◎ | ◎ | ◎ | ◎ |

* LIKELIHOOD OF BEING RETAINED OF SAFETY VALVE 530
◎: RETAINED IN ALL INSTANCES
○: RETAINED IN ALMOST ALL INSTANCES
△: RETAINED IN APPROXIMATELY HALF OF INSTANCES
×: NOT RETAINED
* LIKELIHOOD OF STANDING UP OF SAFETY VALVE 530
◎: STANDS UP IN ALL INSTANCES
○: STANDS UP IN ALMOST ALL INSTANCES
△: STANDS UP IN APPROXIMATELY HALF OF INSTANCES
×: DOES NOT STAND UP

In Table 2, the likelihood of being retained of the safety valve 530 represents whether or not the portion of the first groove 531a is retained at the depressed section 520f of the lid 520 when the safety valve 530 ruptures. It is preferable to suppress or prevent interference between the safety valve 530 and surrounding constituent members when the safety valve 530 ruptures. Accordingly, it is preferable to prevent the safety valve 530 from falling out of the lid 520 when the safety valve 530 ruptures.

In Table 2, the likelihood of standing up of the safety valve 530 represents the likelihood that the safety valve 530 is sufficiently bent and stands up from the depressed section 520f of the lid 520 when the safety valve 530 ruptures. In a case where the safety valve 530 is sufficiently bent and stands up when the safety valve 530 ruptures, the pressure inside the battery 1 can be reduced promptly.

In Table 2, the likelihood of being retained and likelihood of standing up of the safety valve 530 are in a trade-off relation. The better the likelihood of being retained of the safety valve 530 is, the worse the likelihood of standing up of the safety valve 530 is. The better the likelihood of standing up of the safety valve 530 is, the worse the likelihood of being retained of the safety valve 530 is.

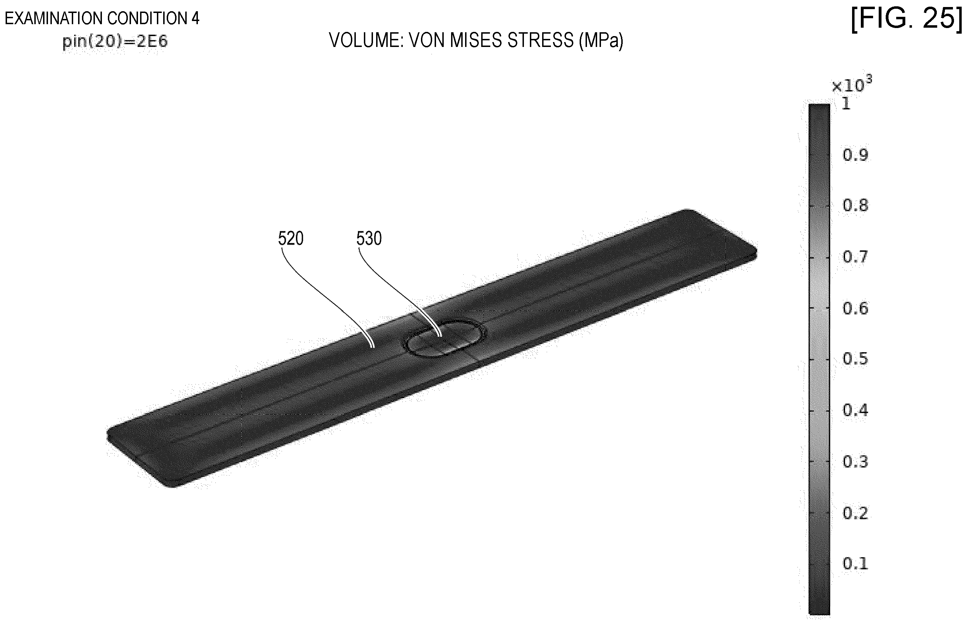

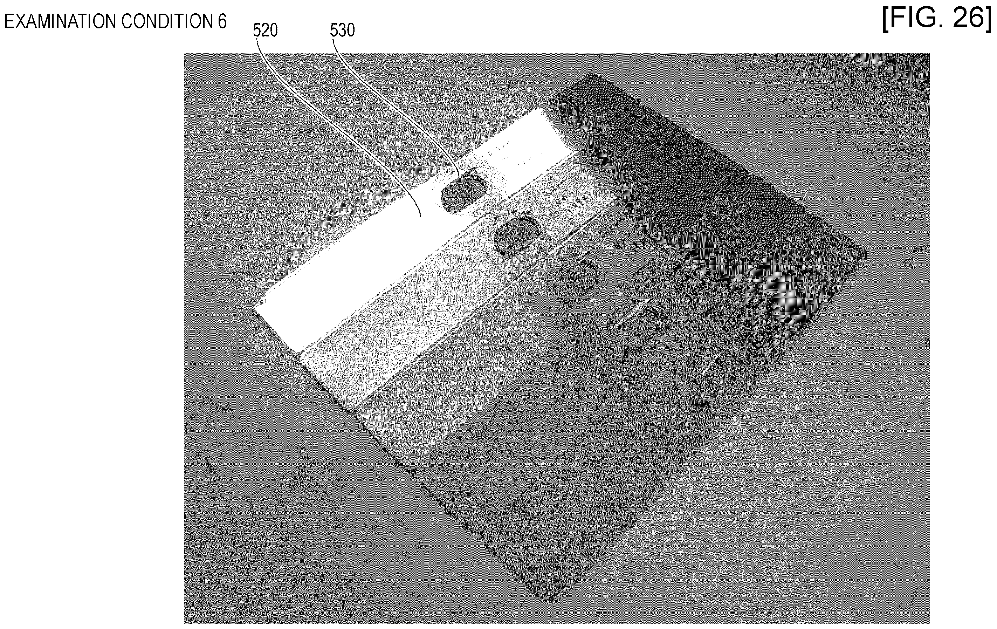

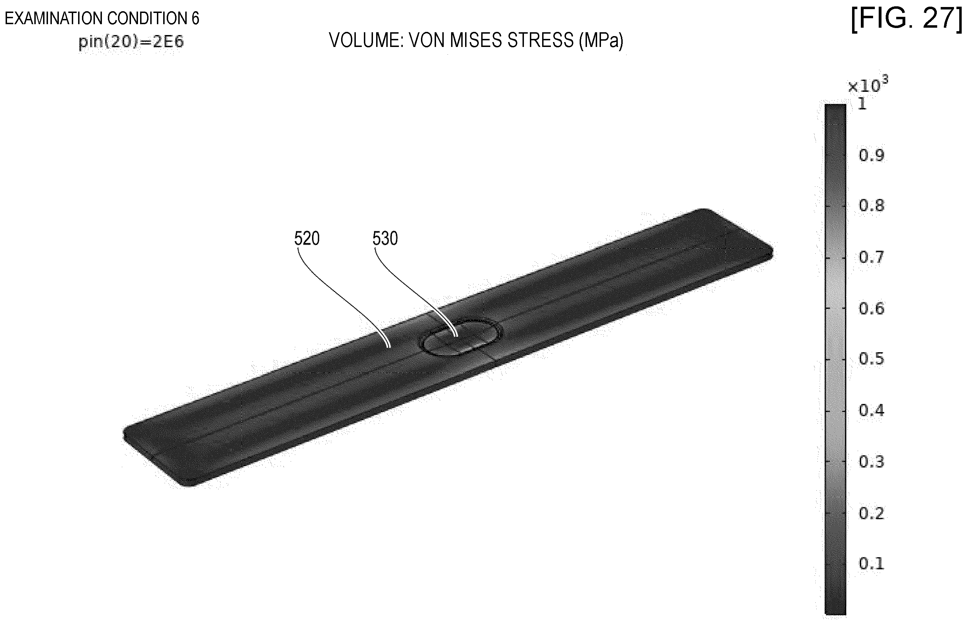

FIG. 24 is a photograph depicting experimental results obtained under Condition 14 in Table 2. FIG. 25 is a simulation image obtained under Condition 14 in Table 2. FIG. 26 is a photograph depicting experimental results obtained under Condition 16 in Table 2. FIG. 27 is a simulation image obtained under Condition 16 in Table 2.

In the simulation, the external shape of the safety valve 530 was designed by 3D CAD software, and thereafter, deformations of the safety valve 530 were analyzed by predetermined stress analysis software.

Regarding the likelihood of being retained of the safety valve 530, as represented by or depicted in Math. 5, Math. 6, and FIG. 21, the maximum value $\sigma_{max}$ of shear force at the first groove 531a of the safety valve 530 is defined by 0.7 times the tensile stress depicted in FIG. 21, and the likelihood of being retained is evaluated. In the embodiment, the maximum value $\sigma$max of shear force of the safety valve 530, that is, the threshold condition for the safety valve 530 to be retained at the lid 520, is equivalent to t/t' = 0.7. When t/t' exceeds 0.7, the safety valve 530 is not retained at the lid 520 and falls out of the lid 520.

Regarding the likelihood of standing up of the safety valve 530, as represented by or depicted in Math. 5, Math. 6, and FIG. 21, the minimum value $\sigma_{min}$ of plastic deformation at the first groove 531a of the safety valve 530 is defined by 0.7 times the elastic limit depicted in FIG. 21, and the likelihood of standing up is evaluated. In the embodiment, the threshold condition for the safety valve 530 to stand up from the lid 520 is equivalent to t/t' = 0.2. When t/t' is smaller than 0.2, the safety valve 530 does not stand up from the lid 520.

The likelihood of being retained and likelihood of standing up of the safety valve 530 are evaluated with reference also to the experimental results and the simulation results, in addition to calculation based on Math. 5 and Math. 6.

Under Examination Condition 11, as depicted in Table 2, the thickness t of the second groove 531b of the middle section 531, the third groove 532c of the one end section 532, and the fourth groove 533d of the other end section 533 of the safety valve 530 is 20 μm. The thickness t' of the first groove 531a of the middle section 531 of the safety valve 530 is 200 μm. The ratio obtained by dividing the thickness t by the thickness t' is a ratio 2. The ratio 2 under Examination Condition 11 is 0.1 (20 μm/200 μm).

Regarding the likelihood of being retained of the safety valve 530 under Examination Condition 11, it is suggested that the portion of the first groove 531a is retained at the depressed section 520f of the lid 520 in all instances in which the safety valve 530 ruptures. The reason why the safety valve 530 having ruptured is retained at the lid 520 is because the ratio 2 is very small, at 0.1. The first groove 531a with the thickness of 200 μm does not rupture, without following rupture of the second groove 531b and the like, in a state where the second groove 531b and the like with the thickness of 20 μm have ruptured. This is because, at the safety valve 530, the rigidity of the first groove 531a is sufficiently higher than the rigidity of the second groove 531b and the like.

Regarding the likelihood of standing up of the safety valve 530 under Examination Condition 11, it is suggested that the safety valve 530 does not stand up in all instances in which the safety valve 530 ruptures. In addition to not rupturing without following rupture of the second groove 531b and the like, the first groove 531a with the thickness of 200 μm is highly unlikely to deform in a state where the second groove 531b and the like with the thickness of 20 μm have ruptured. This is because, at the safety valve 530, the rigidity of the first groove 531a is sufficiently higher than the rigidity of the second groove 531b and the like.

Under Examination Condition 12, as depicted in Table 2, the thickness t of the second groove 531b of the middle section 531, the third groove 532c of the one end section 532, and the fourth groove 533d of the other end section 533 of the safety valve 530 is 40 μm. The thickness t' of the first groove 531a of the middle section 531 of the safety valve 530 is 200 μm. The ratio 2 under Examination Condition 12 is 0.2 (40 μm/200 μm).

Regarding the likelihood of being retained of the safety valve 530 under Examination Condition 12, it is suggested that the portion of the first groove 531a is retained at the depressed section 520f of the lid 520 in all instances in which the safety valve 530 ruptures. The reason why the safety valve 530 having ruptured is retained at the lid 520 is because the ratio 2 is very small, at 0.2. The first groove 531a with the thickness of 200 μm does not rupture, without following rupture of the second groove 531b and the like, in a state where the second groove 531b and the like with the thickness of 40 μm have ruptured. This is because, at the safety valve 530, the rigidity of the first groove 531a is sufficiently higher than the rigidity of the second groove 531b and the like.

Regarding the likelihood of standing up of the safety valve 530 under Examination Condition 12, it is suggested that the safety valve 530 stands up slightly in approximately half of instances in which the safety valve 530 ruptures. The phrase "in approximately half of instances in which the safety valve 530 ruptures" reflects the ratio of t/t' and the experimental results obtained under Examination Condition 14 and Examination Condition 16. In addition to not rupturing without following rupture of the second groove 531b and the like, the first groove 531a with the thickness of 200 μm is unlikely to deform in a state where the second groove 531b and the like with the thickness of 40 μm have ruptured. This is because, at the safety valve 530, the rigidity of the first groove 531a is sufficiently higher than the rigidity of the second groove 531b and the like.

Under Examination Condition 13, as depicted in Table 2, the thickness t of the second groove 531b of the middle section 531, the third groove 532c of the one end section 532, and the fourth groove 533d of the other end section 533 of the safety valve 530 is 60 μm. The thickness t' of the first groove 531a of the middle section 531 of the safety valve 530 is 200 μm. The ratio 2 under Examination Condition 13 is 0.3 (60 μm/200 μm).

Regarding the likelihood of being retained of the safety valve 530 under Examination Condition 13, it is suggested that the portion of the first groove 531a is retained at the depressed section 520f of the lid 520 in all instances in which the safety valve 530 ruptures. The reason why the safety valve 530 having ruptured is retained at the lid 520 is because the ratio 2 is low, at 0.3. The first groove 531a with the thickness of 200 μm does not rupture, without following rupture of the second groove 531b and the like, in a state where the second groove 531b and the like with the thickness of 60 μm have ruptured. This is because, at the safety valve 530, the rigidity of the first groove 531a is sufficiently higher than the rigidity of the second groove 531b and the like.

Regarding the likelihood of standing up of the safety valve 530 under Examination Condition 13, it is suggested that the safety valve 530 stands up in most instances in which the safety valve 530 ruptures. The first groove 531a with the thickness of 200 μm does not rupture, without following rupture of the second groove 531b and the like, and deforms in a state where the second groove 531b and the like with the thickness of 60 μm have ruptured.

Under Examination Condition 14, as depicted in Table 2, the thickness t of the second groove 531b of the middle section 531, the third groove 532c of the one end section 532, and the fourth groove 533d of the other end section 533 of the safety valve 530 is 80 $\mu$m. The thickness t' of the first groove 531a of the middle section 531 of the safety valve 530 is 200 $\mu$m. The ratio 2 under Examination Condition 14 is 0.4 (80 $\mu$m/200 $\mu$m).

Regarding the likelihood of being retained of the safety valve 530 under Examination Condition 14, it is suggested that the portion of the first groove 531a is retained at the depressed section 520f of the lid 520 in all instances in which the safety valve 530 ruptures. The reason why the safety valve 530 having ruptured is retained at the lid 520 is because the ratio 2 is low, at 0.4. The first groove 531a with the thickness of 200 $\mu$m does not rupture, without following rupture of the second groove 531b and the like, in a state where the second groove 531b and the like with the thickness of 80 $\mu$m have ruptured. This is because, at the safety valve 530, the rigidity of the first groove 531a is higher than the rigidity of the second groove 531b and the like.

Regarding the likelihood of standing up of the safety valve 530 under Examination Condition 14, it is suggested that the safety valve 530 sufficiently stands up in all instances in which the safety valve 530 ruptures. The first groove 531a with the thickness of 200 $\mu$m does not rupture, without following rupture of the second groove 531b and the like, and sufficiently deforms in a state where the second groove 531b and the like with the thickness of 80 $\mu$m have ruptured.

Regarding Examination Condition 14, FIG. 24 presents a photograph depicting experimental results that were obtained under Condition 14 in Table 2. The experiment was conducted five times in total. The experiment was conducted by attaching a pressure vessel to the back surface 520b of the lid 520, and applying hydraulic pressure to the safety valve 530 by injecting water to the vessel to pressurize the vessel. FIG. 25 presents a simulation image obtained under Condition 14 in Table 2. The simulation image depicts a state immediately before the safety valve 530 ruptures.

Under Examination Condition 15, as depicted in Table 2, the thickness t of the second groove 531b of the middle section 531, the third groove 532c of the one end section 532, and the fourth groove 533d of the other end section 533 of the safety valve 530 is 100 $\mu$m. The thickness t' of the first groove 531a of the middle section 531 of the safety valve 530 is 200 $\mu$m. The ratio 2 under Examination Condition 15 is 0.5 (100 $\mu$m/200 $\mu$m).

Regarding the likelihood of being retained of the safety valve 530 under Examination Condition 15, it is suggested that the portion of the first groove 531a is retained at the depressed section 520f of the lid 520 in all instances in which the safety valve 530 ruptures. The reason why the safety valve 530 having ruptured is retained at the lid 520 is because the ratio 2 is low, at 0.5. The first groove 531a with the thickness of 200 $\mu$m does not rupture, without following rupture of the second groove 531b and the like, in a state where the second groove 531b and the like with the thickness of 100 $\mu$m have ruptured. This is because, at the safety valve 530, the rigidity of the first groove 531a is higher than the rigidity of the second groove 531b and the like.

Regarding the likelihood of standing up of the safety valve 530 under Examination Condition 15, it is suggested that the safety valve 530 sufficiently stands up in all instances in which the safety valve 530 ruptures. The first groove 531a with the thickness of 200 $\mu$m does not rupture, without following rupture of the second groove 531b and the like, and sufficiently deforms in a state where the second groove 531b and the like with the thickness of 100 $\mu$m have ruptured.

Under Examination Condition 16, as depicted in Table 2, the thickness t of the second groove 531b of the middle section 531, the third groove 532c of the one end section 532, and the fourth groove 533d of the other end section 533 of the safety valve 530 is 120 $\mu$m. The thickness t' of the first groove 531a of the middle section 531 of the safety valve 530 is 200 $\mu$m. The ratio 2 under Examination Condition 16 is 0.6 (120 $\mu$m/200 $\mu$m).

Regarding the likelihood of being retained of the safety valve 530 under Examination Condition 16, it is suggested that the portion of the first groove 531a is retained at the depressed section 520f of the lid 520 in most instances in which the safety valve 530 ruptures. The reason why the safety valve 530 having ruptured is retained at the lid 520 is because the ratio 2 is 0.6 and is equal to or greater than a certain value exceeding 0.5, which is the halfway point. The first groove 531a with the thickness of 200 $\mu$m is unlikely to rupture following rupture of the second groove 531b and the like, in a state where the second groove 531b and the like with the thickness of 120 $\mu$m have ruptured. This is because, at the safety valve 530, the rigidity of the first groove 531a is higher than the rigidity of the second groove 531b and the like.

Regarding the likelihood of standing up of the safety valve 530 under Examination Condition 16, it is suggested that the safety valve 530 sufficiently stands up in all instances in which the safety valve 530 ruptures. The first groove 531a with the thickness of 200 $\mu$m hardly ruptures, without following rupture of the second groove 531b and the like, and sufficiently deforms in a state where the second groove 531b and the like with the thickness of 120 $\mu$m have ruptured.

Regarding Examination Condition 16, FIG. 26 presents a photograph depicting experimental results that were obtained under Condition 16 in Table 2. The experiment was conducted five times in total. The experiment was conducted by attaching a pressure vessel to the back surface 520b of the lid 520, and applying hydraulic pressure to the safety valve 530 by injecting water to the vessel to pressurize the vessel. FIG. 27 presents a simulation image obtained under Condition 14 in Table 2. The simulation image depicts a state immediately before the safety valve 530 ruptures.

Under Examination Condition 17, as depicted in Table 2, the thickness t of the second groove 531b of the middle section 531, the third groove 532c of the one end section 532, and the fourth groove 533d of the other end section 533 of the safety valve 530 is 140 $\mu$m. The thickness t' of the first groove 531a of the middle section 531 of the safety valve 530 is 200

μm. The ratio 2 under Examination Condition 17 is 0.7 (140 μm/200 μm).

Regarding the likelihood of being retained of the safety valve 530 under Examination Condition 17, it is suggested that the portion of the first groove 531a is retained at the depressed section 520f of the lid 520 in approximately half of instances in which the safety valve 530 ruptures. The reason why the safety valve 530 having ruptured falls out of the lid 520 is because the ratio 2 is high, at 0.7. The first groove 531a with the thickness of 200 μm is likely to rupture following rupture of the second groove 531b and the like, in a state where the second groove 531b and the like with the thickness of 140 μm have ruptured. This is because, at the safety valve 530, the rigidity of the first groove 531a is close to the rigidity of the second groove 531b and the like.

Regarding the likelihood of standing up of the safety valve 530 under Examination Condition 17, it is suggested that the safety valve 530 sufficiently stands up in all instances in which the safety valve 530 ruptures. The first groove 531a with the thickness of 200 μm sufficiently deforms while rupturing in approximately half of instances following rupture of the second groove 531b, in a state where the second groove 531b and the like with the thickness of 140 μm have ruptured.

Under Examination Condition 18, as depicted in Table 2, the thickness t of the second groove 531b of the middle section 531, the third groove 532c of the one end section 532, and the fourth groove 533d of the other end section 533 of the safety valve 530 is 150 μm. The thickness t' of the first groove 531a of the middle section 531 of the safety valve 530 is 200 μm. The ratio 2 under Examination Condition 18 is 0.75 (150 μm/200 μm).

Regarding the likelihood of being retained of the safety valve 530 under Examination Condition 18, it is suggested that the portion of the first groove 531a is not retained at the depressed section 520f of the lid 520 in all instances in which the safety valve 530 ruptures. The reason why the safety valve 530 having ruptured falls out of the lid 520 is because the ratio 2 is high, at 0.75. The first groove 531a with the thickness of 200 μm is likely to rupture following rupture of the second groove 531b and the like, in a state where the second groove 531b and the like with the thickness of 150 μm have ruptured. This is because, at the safety valve 530, the rigidity of the first groove 531a is close to the rigidity of the second groove 531b and the like.

Regarding the likelihood of standing up of the safety valve 530 under Examination Condition 18, it is suggested that the safety valve 530 sufficiently stands up in all instances in which the safety valve 530 ruptures. The first groove 531a with the thickness of 200 μm sufficiently deforms while rupturing in all instances following rupture of the second groove 531b, in a state where the second groove 531b and the like with the thickness of 150 μm have ruptured.

Under Examination Condition 19, as depicted in Table 2, the thickness t of the second groove 531b of the middle section 531, the third groove 532c of the one end section 532, and the fourth groove 533d of the other end section 533 of the safety valve 530 is 175 μm. The thickness t' of the first groove 531a of the middle section 531 of the safety valve 530 is 200 μm. The ratio 2 under Examination Condition 19 is approximately 0.88 (175 μm/200 μm).

Regarding the likelihood of being retained of the safety valve 530 under Examination Condition 19, it is suggested that the portion of the first groove 531a is not retained at the depressed section 520f of the lid 520 in all instances in which the safety valve 530 ruptures. The reason why the safety valve 530 having ruptured falls out of the lid 520 is because the ratio 2 is very high, at 0.88. The first groove 531a with the thickness of 200 μm is highly likely to rupture following rupture of the second groove 531b and the like, in a state where the second groove 531b and the like with the thickness of 175 μm have ruptured. This is because, at the safety valve 530, the rigidity of the first groove 531a is very close to the rigidity of the second groove 531b and the like.

Regarding the likelihood of standing up of the safety valve 530 under Examination Condition 19, it is suggested that the safety valve 530 sufficiently stands up in all instances in which the safety valve 530 ruptures. The first groove 531a with the thickness of 200 μm sufficiently deforms while rupturing in all instances following rupture of the second groove 531b, in a state where the second groove 531b and the like with the thickness of 175 μm have ruptured.

(Advantages of Safety Valve 530 and Battery 1 According to Embodiment)

Advantages of the safety valve 530 and the battery 1 according to the embodiment are explained with reference to Table 1, Table 2, and FIG. 12 to FIG. 19.

(1) The linear first groove 531a, the linear second groove 531b, the arcuate third groove 532c, and the arcuate fourth groove 533d are formed on the safety valve 530. The thickness of the first groove 531a is thicker than the thickness of the second groove 531b, the third groove 532c, and the fourth groove 533d. That is, the first groove 531a is a thicker section, whereas the second groove 531b, the third groove 532c, and the fourth groove 533d are thinner sections. According to such a configuration, rupture can be started from the second groove 531b, which is a linear thinner section. Rupture of the safety valve 530 propagates to the third groove 532c and the fourth groove 533d with the second groove 531b as the starting point, and stops or is likely to stop at an end section of the first groove 531a, which is a thicker section.

Here, for example, there is a fear that, in a configuration in which the middle section of the first groove 531a is a thicker section and both end sections of the first groove 531a are thinner sections, the safety valve 530 falls out of the lid 520 undesirably. In addition, for example, there is a fear that, in a configuration in which at least parts of the arcuate third groove 532c and fourth groove 533d are thicker sections, a sufficiently large opening area cannot be ensured after rupture. In contrast, in the embodiment, the first groove 531a of the safety valve 530 is entirely a thicker section, whereas the third groove 532c and the fourth groove 533d are not provided with thicker sections. Because of this, it is possible to obtain the safety valve 530 that can sufficiently rupture at a predetermined pressure while being retained at the exterior body, and obtain the lid (exterior body) 520 and the battery 1 including the safety valve 530.

(2) The length d along the longitudinal direction X (first direction) of the middle section 531 of the safety valve 530 is equal to or greater than 1 mm. The length d of the middle section 531 of the safety valve 530 is equal to or greater than 0.5 times and equal to or less than three times the diameter $\varphi$ of the one end section 532 and the other end section 533. The thickness of the second groove 531b, the third groove 532c, and the fourth groove 533d of the safety valve 530 is equal to or greater than 0.2 times and equal to or less than 0.7 times the thickness of the first groove 531a.

(15) to (18) The battery 1 has the charge/discharge body 100, the lid 520 (exterior body) that houses the charge/discharge body 100 and extends along the longitudinal direction X (first direction), and the safety valve 530 provided to the lid 520. The safety valve 530 may be provided to the vessel 510.

According to such a configuration, the length d along the longitudinal direction X (first direction) of the middle section 531 of the safety valve 530 is set to be equal to or greater than 1 mm. That is, the length d along the longitudinal direction X between the one end 531p and the other end 531q of the middle section 531 is set to be equal to or greater than 1 mm. With such settings, the safety valve 530 is provided with a rectangular portion in addition to a pair of semicircular portions. The safety valve 530 ruptures with the rectangular portion as the starting point.

Further, according to such a configuration, the length d of the middle section 531 of the safety valve 530 is set to be equal to or greater than 0.5 times and equal to or less than three times the diameter $\varphi$ of the one end section 532 and the other end section 533. With such settings, the starting area of rupture of the safety valve 530 can be confined within a certain range as explained with reference to Table 1, FIG. 20, and FIG. 21. Upon receiving a predetermined pressure, the safety valve 530 starts rupture from the area where the displacement amount at the second groove 531b is the greatest as the starting point. The possibility that the starting position of rupture of the safety valve 530 is stabilized at the middle of the second groove 531b and is positionally consistent increases as the starting area of rupture decreases in size. As a result, the safety valve 530 easily ruptures in accordance with its specifications.

Further, according to such a configuration, the thickness of the second groove 531b, the third groove 532c, and the fourth groove 533d of the safety valve 530 is set to be equal to or greater than 0.2 times and equal to or less than 0.7 times the thickness of the first groove 531a. With such settings, it is possible to achieve a balance between the likelihood of being retained and the likelihood of standing up, which are in a trade-off relation, of the safety valve 530 as explained with reference to Table 2 and FIG. 22 to FIG. 25. The likelihood of being retained of the safety valve 530 represents whether or not the portion of the first groove 531a is retained at the depressed section 520f of the lid 520 when the safety valve 530 ruptures. It is preferable to suppress or prevent interference between the safety valve 530 and surrounding constituent members when the safety valve 530 ruptures. The likelihood of standing up of the safety valve 530 represents the likelihood that the safety valve 530 is sufficiently bent and stands up from the depressed section 520f of the lid 520 when the safety valve 530 ruptures. In a case where the safety valve 530 is sufficiently bent and stands up when the safety valve 530 ruptures, the pressure inside the battery 1 can be reduced promptly.

Accordingly, the safety valve 530 of the battery 1 can sufficiently rupture at a predetermined pressure while being retained at the lid 520.

(3) The thickness of the second groove 531b, the third groove 532c, and the fourth groove 533d of the safety valve 530 is the same.

According to such a configuration, it is possible to cause a pressure to be applied evenly to the second groove 531b, the third groove 532c, and the fourth groove 533d when a predetermined pressure is applied to the safety valve 530. Accordingly, it is possible to cause the safety valve 530 to rupture favorably.

(4) The one end section 532 and the other end section 533 of the safety valve 530 are formed in shapes that are symmetrical with respect to the middle section 531.

According to such a configuration, it is possible to cause a pressure to be applied evenly to the second groove 531b, the third groove 532c, and the fourth groove 533d when a predetermined pressure is applied to the safety valve 530. Accordingly, it is possible to cause the safety valve 530 to rupture favorably.

(5) The length d of the middle section 531 of the safety valve 530 is equal to or greater than 0.5 times and less than one times the diameter $\varphi$ of the one end section 532 and the other end section 533.

According to such a configuration, it is preferable to apply the safety valve 530 to a relatively high-capacity BEV-type battery 1. As compared with a HEV-type battery 1, the BEV-type battery 1 often has a length along the lateral direction Y which is relatively shorter than the length along the longitudinal direction X. That is, the aspect ratio in the longitudinal direction X and the lateral direction Y of the safety valve 530 is set relatively low according to the shapes of the lid 520 and the vessel 510.

(6) The length d of the middle section 531 of the safety valve 530 is equal to or greater than one times and equal to or less than three times the diameter φ of the one end section 532 and the other end section 533.

According to such a configuration, it is preferable to apply the safety valve 530 to a relatively high-power (relatively low-capacity) HEV-type battery 1. As compared with a BEV-type battery 1, the HEV-type battery 1 often has a length along the lateral direction Y which is relatively longer than the length along the longitudinal direction X. That is, the aspect ratio in the longitudinal direction X and the lateral direction Y of the safety valve 530 is set relatively high according to the shapes of the lid 520 and the vessel 510.

(7) The thickness of the second groove 531b, the third groove 532c, and the fourth groove 533d of the safety valve 530 is equal to or greater than 0.3 times and equal to or less than 0.6 times the thickness of the first groove 531a.

According to such a configuration, as compared with the case where the thickness of the second groove 531b, the third groove 532c, and the fourth groove 533d of the safety valve 530 is set to be equal to or greater than 0.2 times and less than 0.3 times the thickness of the first groove 531a, the likelihood of standing up of the safety valve 530 depicted in Table 2 can be enhanced further. In addition, as compared with the case where the thickness of the second groove 531b, the third groove 532c, and the fourth groove 533d of the safety valve 530 is set to be greater than 0.6 times and equal to or less than 0.7 times the thickness of the first groove 531a, the likelihood of being retained of the safety valve 530 depicted in Table 2 can be enhanced further.

(9) The middle section 531, the one end section 532, and the other end section 533 of the safety valve 530 are entirely curved in a projecting manner in a direction away from the charge/discharge body 100.

According to such a configuration, when the safety valve 530 receives a predetermined pressure from the side of the charge/discharge body 100, the middle section 531, the one end section 532, and the other end section 533 easily deform and rupture in a direction away from the charge/discharge body 100, with the projectingly-curved portion as a reference section. The direction away from the charge/discharge body 100 is a direction away from the battery 1.

(14) The middle section 531, the one end section 532, and the other end section 533 of the safety valve 530 are formed integrally with the lid 520 (exterior body).

(19) The safety valve 530 is formed integrally with the lid 520 (exterior body).

According to such a configuration, as compared with the case where the safety valve 530 and the lid 520 are formed as separate bodies, the safety valve 530 can be formed easily.

At the safety valve 530, the first groove 531a, the second groove 531b, the third groove 532c, and the fourth groove 533d are provided on the side farther from the charge/discharge body 100. The first groove 531a, the second groove 531b, the third groove 532c, and the fourth groove 533d are visible from the outside of the battery 1. The first groove 531a, the second groove 531b, the third groove 532c, and the fourth groove 533d are not visible from the side of the charge/discharge body 100. Since the first groove 531a, the second groove 531b, the third groove 532c, and the fourth groove 533d are formed thin in a groove-like manner, the first groove 531a, the second groove 531b, the third groove 532c, and the fourth groove 533d are visible as marks from the side of the charge/discharge body 100 in some cases.

According to such a configuration, in a case where, for example, the lid 520 is press-formed to form the safety valve 530, the material of the portions of the first groove 531a, the second groove 531b, the third groove 532c, and the fourth groove 533d can be easily moved to the side farther from the charge/discharge body 100, that is, to the outside of the battery 1. That is, it is possible to suppress or prevent the movement of the material of the portions of the first groove 531a, the second groove 531b, the third groove 532c, and the fourth groove 533d of the safety valve 530 to the side closer to the charge/discharge body 100, that is, to the inside of the battery 1. If the material of the portions of the first groove 531a, the second groove 531b, the third groove 532c, and the fourth groove 533d moves to the side closer to the charge/discharge body 100, there is a possibility that the safety valve 530 bulges in a projecting manner toward the side of the charge/discharge body 100.

(Safety Valve 810 According to First Modification Example of Embodiment)

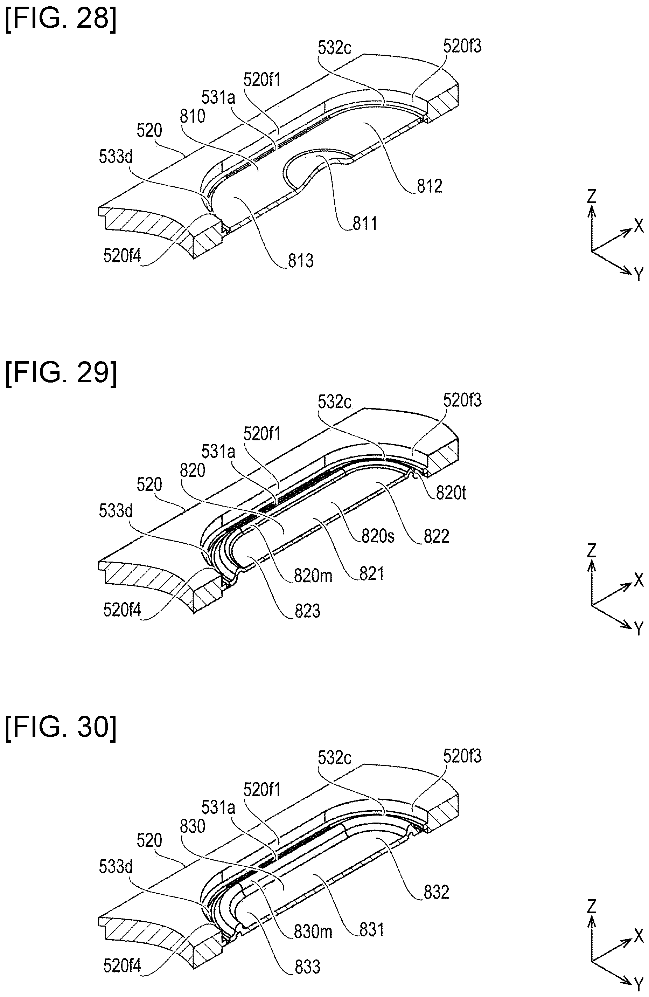

A safety valve 810 is explained with reference to FIG. 28.

FIG. 28 is a cross-sectional perspective view depicting the safety valve 810 and the lid 520 according to a first modification example of the embodiment.

(8) A middle section 811, one end section 812, and another end section 813 of the safety valve 810 are at least partially curved in a projecting manner in a direction away from the charge/discharge body 100. In the first modification example of the embodiment, only part of the middle section 811 of the safety valve 810 is curved in a projecting manner in a direction away from the charge/discharge body 100. Only the middle section 811 is entirely curved in a projecting manner in a direction away from the charge/discharge body 100, in another possible configuration. The entire middle section 811, part of the one end section 812, and part of the other end section 813 are curved in a projecting manner in a direction away from the charge/discharge body 100, in another possible configuration.

According to such configurations, when the safety valve 530 receives a predetermined pressure from the side of the charge/discharge body 100, the middle section 531, the one end section 532, and the other end section 533 deform and rupture in a direction away from the charge/discharge body 100, with the middle section 531 as a reference section.

(Safety Valve 820 According to Second Modification Example of Embodiment)

A safety valve 820 is explained with reference to FIG. 29.

FIG. 29 is a cross-sectional perspective view depicting the safety valve 820 and the lid 520 according to a second modification example of the embodiment.

(11) In a middle section 821, one end section 822, and another end section 823 of the safety valve 820, an area on the inner side of an annular and projectingly curved portion is positioned on the side farther from the charge/discharge body 100 than an area on the outer side of the annular and projectingly curved portion is. At the safety valve 820, an annular section 820m constituting the projectingly curved portion annularly encloses the areas of the middle section 821, the one end section 822, and the other end section 823. At the safety valve 820, the annular section 820m is positioned on the inner side of the first groove 531a, the second groove 531b, the third groove 532c, and the fourth groove 533d. At the safety valve 820, an area 820s on the inner side of the annular section 820m is positioned in an upward direction along the height direction Z than an area 820t on the outer side of the annular section 820m is. It is sufficient if the middle section 821, the one end section 822, and the other end section 823 of the safety valve 820 include a portion in which the area 820s is positioned on the side farther from the charge/discharge body 100 than the area 820t is.

According to such a configuration, when the safety valve 530 receives a predetermined pressure from the side of the charge/discharge body 100, the middle section 531, the one end section 532, and the other end section 533 deform and rupture in a direction away from the charge/discharge body 100, with the area 820s on the inner side of the annular section 820m as a reference section.

(Safety Valve 830 According to Third Modification Example of Embodiment)

A safety valve 830 is explained with reference to FIG. 30.

FIG. 30 is a cross-sectional perspective view depicting the safety valve 830 and the lid 520 according to a third modification example of the embodiment.

(10) A middle section 831, one end section 832, and another end section 833 of the safety valve 830 are annularly curved in a projecting manner in a direction away from the charge/discharge body 100. At the safety valve 830, an annular section 830m constituting the projectingly curved portion annularly encloses the areas of the middle section 831, the one end section 832, and the other end section 833. At the safety valve 830, the annular section 830m is positioned on the inner side relative to the first groove 531a, the second groove 531b, the third groove 532c, and the fourth groove 533d. It is sufficient if the middle section 831, the one end section 832, and the other end section 833 of the safety valve 830 include the portion that is annular and curved in a projecting manner in a direction away from the charge/discharge body 100.

According to such a configuration, when the safety valve 530 receives a predetermined pressure from the side of the charge/discharge body 100, the middle section 531, the one end section 532, and the other end section 533 deform and rupture in a direction away from the charge/discharge body 100, with the annular section 830m as a reference section.

(Safety Valve 840 According to Fourth Modification Example of Embodiment)

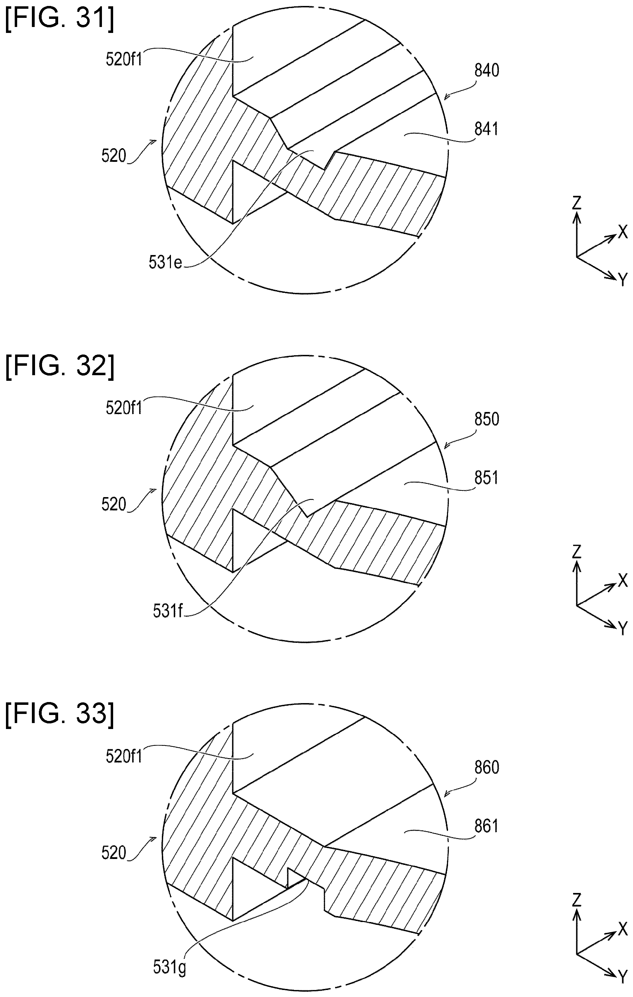

A safety valve 840 is explained with reference to FIG. 31.

FIG. 31 is a cross-sectional perspective view depicting the safety valve 840 and the lid 520 according to a fourth modification example of the embodiment.

(12) At the safety valve 840, at least a first groove 531e is provided on the side farther from the charge/discharge body 100 and is formed in a trapezoidal shape that relatively tapers toward its bottom surface. The first groove 531e is visible from the outside of the battery 1. The first groove 531e is not visible from the side of the charge/discharge body 100. Since the first groove 531e is formed thin in a groove-like manner, the first groove 531e is visible as a mark from the side of the charge/discharge body 100 in some cases. It is sufficient if the first groove 531e includes a portion formed in a trapezoidal shape whose top surface is greater than the bottom surface. That is, the first groove 531e need not be formed in a trapezoidal shape entirely. The second groove 531b, the third groove 532c, and the fourth groove 533d also may be provided on the side farther from the charge/discharge body 100 and be formed in trapezoidal shapes that relatively taper toward the bottom surfaces.

According to such a configuration, when the safety valve 840 ruptures and the portion of the first groove 531e of the safety valve 840 deforms toward the side farther from the charge/discharge body 100, a portion facing a middle section 841 of the safety valve 840 with the first groove 531e being interposed therebetween is unlikely to interfere with the middle section 841. That is, the middle section 841 of the safety valve 840 can sufficiently stand up with the first groove 531e as the starting point.

(Safety Valve 850 According to Fifth Modification Example of Embodiment)

A safety valve 850 is explained with reference to FIG. 32.

FIG. 32 is a cross-sectional perspective view depicting the safety valve 850 and the lid 520 according to a fifth modification example of the embodiment.

(13) At the safety valve 850, at least a first groove 531f is provided on the side farther from the charge/discharge body 100 and is formed in a V shape that relatively tapers toward its bottom surface. The first groove 531f is visible from the outside of the battery 1. The first groove 531f is not visible from the side of the charge/discharge body 100. Since the first groove 531f is formed thin in a groove-like manner, the first groove 531f is visible as a mark from the side of the charge/discharge body 100 in some cases. It is sufficient if the first groove 531f includes a portion formed in a V shape whose top surface is greater than the bottom surface. That is, the first groove 531f need not be formed in a V shape entirely. The second groove 531b, the third groove 532c, and the fourth groove 533d also may be provided on the side farther from the charge/discharge body 100 and be formed in V shapes that relatively taper toward the bottom surfaces.

According to such a configuration, when the safety valve 850 ruptures and the portion of the first groove 531f of the safety valve 850 deforms toward the side farther from the charge/discharge body 100, a portion facing a middle section 851 of the safety valve 850 with the first groove 531f being interposed therebetween is unlikely to interfere with the middle section 851. That is, the middle section 851 of the safety valve 850 can sufficiently stand up with the first groove 531f as the starting point.

(Safety Valve 860 According to Sixth Modification Example of Embodiment)

A safety valve 860 is explained with reference to FIG. 33.

FIG. 33 is a cross-sectional perspective view depicting the safety valve 860 and the lid 520 according to a sixth modification example of the embodiment.

At the safety valve 860, a first groove 531g, the second groove 531b, the third groove 532c, and the fourth groove 533d are provided on the side closer to the charge/discharge body 100. For example, at a middle section 861 of the safety valve 860, as depicted in FIG. 33, the first groove 531g is provided on the side closer to the charge/discharge body 100. The first groove 531g, the second groove 531b, the third groove 532c, and the fourth groove 533d are visible from the side of the charge/discharge body 100. The first groove 531g, the second groove 531b, the third groove 532c, and the fourth groove 533d are not visible from the outside of the battery 1. Since the first groove 531g, the second groove 531b, the third groove 532c, and the fourth groove 533d are formed thin in a groove-like manner, the first groove 531g, the second groove 531b, the third groove 532c, and the fourth groove 533d are visible as marks from the outside of the battery 1 in some cases.

The safety valve 860 can be applied to a configuration in which the first groove 531g, the second groove 531b, the third groove 532c, and the fourth groove 533d are provided on the side closer to the charge/discharge body 100 as described above.

(Battery of Other Embodiments)

The battery according to the present invention can be configured as appropriate on the basis of contents described in claims, without being limited to the configurations of the battery described in the embodiment.

The embodiment is explained in detail or simply for explaining the present invention in an easy-to-understand manner. The embodiment does not necessarily have to include all the configurations explained or may include unillustrated configurations. In addition, some of configurations according to the embodiment may be deleted or replaced with configurations of other embodiments, and configurations of other embodiments may be combined.

The battery according to the present invention is not limited to a lithium ion battery. For example, the battery according to the present invention can be applied to a nickel-metal hydride battery or a lead battery. The battery according to the present invention is not limited to a secondary battery. The battery according to the present invention can be applied to a primary battery. The charge/discharge body in the battery according to the present invention is not limited to a charge/discharge body of a winding type having a wound bundle of a positive electrode, a separator, and a negative electrode, each of which is formed in an elongated shape. A charge/discharge body of a stacked type formed by alternately stacking a plurality of positive electrodes, separators, and negative electrodes, each of which is formed in a rectangular shape, can be applied as the charge/discharge body in the battery according to the present invention. A charge/discharge body of a stacked type formed by alternately providing, to one separator which is formed in an elongated shape, a plurality of positive electrodes, each of which is formed in a relatively shortened shape, and a plurality of negative electrodes, each of which is formed in a relatively shortened shape, while making the positive electrodes and the negative electrodes face each other with the separator being interposed therebetween can be applied as the charge/discharge body in the battery according to the present invention. In the thus-configured charge/discharge body, the positive electrodes and the negative electrodes face each other with the separator being interposed therebetween, by folding and stacking the separator. The battery according to the present invention is not limited to a configuration provided with one charge/discharge body. The battery according to the present invention can be applied to a configuration provided with two or more charge/discharge bodies. The battery according to the present invention is not limited to a configuration in which the charge/discharge body is sealed with a vessel and a lid. The battery according to the present invention can be applied to a configuration in which the charge/discharge body is sealed with a laminate film.

Description of Reference Characters

1: Battery
100: Charge/discharge body
110: Positive electrode
111: Positive electrode current collecting layer
112: Positive electrode active material layer
120: Negative electrode
121: Negative electrode current collecting layer
122: Negative electrode active material layer
130: Separator
140: Electrolyte
200: Current collector
210: Positive electrode current collecting board
220: Negative electrode current collecting board
300: Current interrupter
310: Diaphragm
310a: Body section
310b: First joining section
310c: Second joining section
320: Conductive member
330: Support base
340: Plug
400: Electrode terminal
410: Positive electrode terminal
420: Negative electrode terminal
421: First member
422: Second member
500: Housing
510: Vessel (exterior body)
520: Lid (exterior body)
520a: Front surface
520b: Back surface
520c: Positive electrode insertion hole
520d: Negative electrode insertion hole
520e: Liquid injection insertion hole
520f: Depressed section
520f1: first inner edge
520f2: second inner edge
520f3: third inner edge
520f4: fourth inner edge
530: Safety valve
531: Middle section
531a: First groove
531b: Second groove
531e: First groove
531f: First groove
531g: First groove
531p: One end
531q: Other end

532: One end section
532c: Third groove
533: Other end section
533d: Fourth groove
540: Sealing plug
600: Insulator
610: Insulating cover
620: Positive electrode side insulating board
630: Negative electrode side insulating board
700: Sealing body
710: Positive electrode side first gasket
720: Positive electrode side second gasket
730: Negative electrode side first gasket
740: Negative electrode side second gasket
810: Safety valve
811: Middle section
812: One end section
813: Other end section
820: Safety valve
820m: Annular section
820s: Area
820t: Area
821: Middle section
822: One end section
823: Other end section
830: Safety valve
830m: Annular section
831: Middle section
832: One end section
833: Other end section
840: Safety valve
841: Middle section
850: Safety valve
851: Middle section
860: Safety valve
861: Middle section
X: Longitudinal direction (first direction)
Y: Lateral direction (second direction)
Z: Height direction

**Claims**

1. A safety valve provided to a battery having a charge/discharge body and an exterior body that houses the charge/discharge body and extends along a first direction, wherein

   the exterior body to be used is one including a depressed section including

      a first inner edge that is formed in a linear shape along the first direction on one side along a second direction intersecting the first direction,
      a second inner edge that is formed in a linear shape along the first direction on another side along the second direction and faces the first inner edge along the second direction,
      a third inner edge that is continuous with the first inner edge and the second inner edge and is formed in an arcuate shape, and
      a fourth inner edge that faces the third inner edge along the first direction, is continuous with the first inner edge and the second inner edge, and is formed in an arcuate shape,

   the safety valve includes

a middle section formed in a rectangular shape at the depressed section of the exterior body,
one end section that is continuous with the middle section at the depressed section and is formed in a semicircular shape on one end side of the middle section along the first direction, and
another end section that is continuous with the middle section at the depressed section and is formed in a semicircular shape on another end side of the middle section along the first direction,

the middle section, the one end section, and the other end section are thinner than the exterior body,
the middle section includes a first groove that is adjacent to the first inner edge and is formed in a recessed manner, and a second groove that is adjacent to the second inner edge and is formed in a recessed manner,
the one end section includes a third groove that is continuous with the first groove and the second groove, is adjacent to the third inner edge, and is formed in a recessed manner,
the other end section includes a fourth groove that is continuous with the first groove and the second groove, is adjacent to the fourth inner edge, and is formed in a recessed manner,
the first groove and the second groove are formed in linear shapes,
the third groove and the fourth groove are formed in arcuate shapes, and
a thickness of the first groove is thicker than a thickness of the second groove, the third groove, and the fourth groove.

2. The safety valve according to claim 1, wherein

a length along the first direction of the middle section is equal to or greater than 0.5 times and equal to or less than three times a diameter of the one end section and the other end section, and
the thickness of the second groove, the third groove, and the fourth groove is equal to or greater than 0.2 times and equal to or less than 0.7 times the thickness of the first groove.

3. The safety valve according to claim 1, wherein the second groove, the third groove, and the fourth groove have the same thickness.

4. The safety valve according to claim 1, wherein the one end section and the other end section are formed in shapes that are symmetrical with respect to the middle section.

5. The safety valve according to claim 2, wherein the length of the middle section is equal to or greater than 0.5 times and less than one times the diameter of the one end section and the other end section.

6. The safety valve according to claim 2, wherein the length of the middle section is equal to or greater than one times and equal to or less than three times the diameter of the one end section and the other end section.

7. The safety valve according to claim 2, wherein the thickness of the second groove, the third groove, and the fourth groove is equal to or greater than 0.3 times and equal to or less than 0.6 times the thickness of the first groove.

8. The safety valve according to claim 1, wherein the middle section, the one end section, and the other end section are at least partially curved in a projecting manner in a direction away from the charge/discharge body.

9. The safety valve according to claim 1, wherein the middle section, the one end section, and the other end section are entirely curved in a projecting manner in a direction away from the charge/discharge body.

10. The safety valve according to claim 1, wherein the middle section, the one end section, and the other end section include a portion that is annular and curved in a projecting manner in a direction away from the charge/discharge body.

11. The safety valve according to claim 10, wherein the middle section, the one end section, and the other end section include a portion in which an area on an inner side of the annular and projectingly curved portion is positioned on a side farther from the charge/discharge body than an area on an outer side of the annular and projectingly curved portion is.

12. The safety valve according to claim 1, wherein at least the first groove is provided on a side farther from the charge/discharge body and includes a portion formed in a trapezoidal shape that relatively tapers toward its bottom surface.

13. The safety valve according to claim 1, wherein at least the first groove is provided on a side farther from the charge/discharge body and includes a portion formed in a V shape that relatively tapers toward its bottom surface.

14. The safety valve according to claim 1, wherein the middle section, the one end section, and the other end section are formed integrally with the exterior body.

15. An exterior body that houses a charge/discharge body and extends along a first direction, wherein

the exterior body includes a depressed section and a safety valve,
the depressed section includes

a first inner edge that is formed in a linear shape along the first direction on one side along a second direction intersecting the first direction,
a second inner edge that is formed in a linear shape along the first direction on another side along the second direction and faces the first inner edge along the second direction,
a third inner edge that is continuous with the first inner edge and the second inner edge and is formed in an arcuate shape, and
a fourth inner edge that faces the third inner edge along the first direction, is continuous with the first inner edge and the second inner edge, and is formed in an arcuate shape,

the safety valve includes

a middle section formed in a rectangular shape at the depressed section of the exterior body,
one end section that is continuous with the middle section at the depressed section and is formed in a semicircular shape on one end side of the middle section along the first direction, and
another end section that is continuous with the middle section at the depressed section and is formed in a semicircular shape on another end side of the middle section along the first direction,

the middle section, the one end section, and the other end section are thinner than the exterior body,
the middle section includes a first groove that is adjacent to the first inner edge and is formed in a recessed manner, and a second groove that is adjacent to the second inner edge and is formed in a recessed manner,
the one end section includes a third groove that is continuous with the first groove and the second groove, is adjacent to the third inner edge, and is formed in a recessed manner,
the other end section includes a fourth groove that is continuous with the first groove and the second groove, is adjacent to the fourth inner edge, and is formed in a recessed manner,
the first groove and the second groove are formed in linear shapes,
the third groove and the fourth groove are formed in arcuate shapes, and
a thickness of the first groove is thicker than a thickness of the second groove, the third groove, and the fourth groove.

16. The exterior body according to claim 15, wherein

a length along the first direction of the middle section is equal to or greater than 0.5 times and equal to or less than three times a diameter of the one end section and the other end section, and
the thickness of the second groove, the third groove, and the fourth groove is equal to or greater than 0.2 times and equal to or less than 0.7 times the thickness of the first groove.

17. A battery comprising:

a charge/discharge body;
an exterior body that houses the charge/discharge body and extends along a first direction; and
a safety valve provided to the exterior body, wherein
the exterior body includes a depressed section,
the depressed section includes

a first inner edge that is formed in a linear shape along the first direction on one side along a second direction intersecting the first direction,
a second inner edge that is formed in a linear shape along the first direction on another side along the second direction and faces the first inner edge along the second direction,

# EP 4 787 585 A1

a third inner edge that is continuous with the first inner edge and the second inner edge and is formed in an arcuate shape, and

a fourth inner edge that faces the third inner edge along the first direction, is continuous with the first inner edge and the second inner edge, and is formed in an arcuate shape,

the safety valve includes

a middle section formed in a rectangular shape at the depressed section of the exterior body,

one end section that is continuous with the middle section at the depressed section and is formed in a semicircular shape on one end side of the middle section along the first direction, and

another end section that is continuous with the middle section at the depressed section and is formed in a semicircular shape on another end side of the middle section along the first direction,

the middle section, the one end section, and the other end section are thinner than the exterior body,

the middle section includes a first groove that is adjacent to the first inner edge and is formed in a recessed manner, and a second groove that is adjacent to the second inner edge and is formed in a recessed manner,

the one end section includes a third groove that is continuous with the first groove and the second groove, is adjacent to the third inner edge, and is formed in a recessed manner,

the other end section includes a fourth groove that is continuous with the first groove and the second groove, is adjacent to the fourth inner edge, and is formed in a recessed manner,

the first groove and the second groove are formed in linear shapes,

the third groove and the fourth groove are formed in arcuate shapes, and

a thickness of the first groove is thicker than a thickness of the second groove, the third groove, and the fourth groove.

18. The battery according to claim 17, wherein

a length along the first direction of the middle section is equal to or greater than 0.5 times and equal to or less than three times a diameter of the one end section and the other end section, and

the thickness of the second groove, the third groove, and the fourth groove is equal to or greater than 0.2 times and equal to or less than 0.7 times the thickness of the first groove.

19. The battery according to claim 17, wherein the safety valve is formed integrally with the exterior body.

31

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

[FIG. 15]

[FIG. 16]

[FIG. 17]

[FIG. 18]

[FIG. 19]

[FIG. 20]

HIGH

RUPTURE PRESSURE OF SAFETY VALVE 530: P

$P = \alpha \times t$

0

LONG

THICKNESS OF SECOND GROOVE 531b, THIRD GROOVE 532b,
AND FOURTH GROOVE 533d OF SAFETY VALVE 530: t

[FIG. 21]

HIGH

FORCE APPLIED TO FIRST GROOVE 531a
OF SAFETY VALVE 530

TENSILE STRESS

RUPTURE STRESS

ELASTIC
LIMIT

0

ELASTIC
DEFORMATION

PLASTIC DEFORMATION

LONG

ELONGATION OF FIRST GROOVE 531a OF SAFETY VALVE 530

[FIG. 22]

EP 4 787 585 A1

[FIG. 23]

EP 4 787 585 A1

[FIG. 24]

EXAMINATION CONDITION 4

520    530

EP 4 787 585 A1

[FIG. 25]

EXAMINATION CONDITION 4

pin(20)=2E6

VOLUME: VON MISES STRESS (MPa)

520    530

$\times 10^3$
1
0.9
0.8
0.7
0.6
0.5
0.4
0.3
0.2
0.1

[FIG. 26]

EP 4 787 585 A1

EXAMINATION CONDITION 6
pin(20)=2E6

VOLUME: VON MISES STRESS (MPa)

[FIG. 27]

[FIG. 28]

[FIG. 29]

[FIG. 30]

[FIG. 31]

520f1

840

520

841

531e

Z
X
Y

[FIG. 32]

520f1

850

520

851

531f

Z
X
Y

[FIG. 33]

520f1

860

520

861

531g

Z
X
Y

## INTERNATIONAL SEARCH REPORT

International application No.

**PCT/JP2023/035797**

### A. CLASSIFICATION OF SUBJECT MATTER

*H01M 50/342*(2021.01)i; *H01M 50/103*(2021.01)i; *H01M 50/15*(2021.01)i
FI: H01M50/342 101; H01M50/15; H01M50/103

According to International Patent Classification (IPC) or to both national classification and IPC

### B. FIELDS SEARCHED

Minimum documentation searched (classification system followed by classification symbols)

H01M50/342; H01M50/103; H01M50/15

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-080598 A (HITACHI MAXELL LTD.) 29 March 2007 (2007-03-29) paragraphs [0015]-[0025], [0038]-[0041], fig. 1-4, example 1 | 1-7, 12, 14-19 |
| Y | | 8-11, 13 |
| Y | JP 11-273640 A (MIYAMA TOOL KK) 08 October 1999 (1999-10-08) paragraphs [0018]-[0024], fig. 1-4, 7-9, 17 | 8-11 |
| Y | Microfilm of the specification and drawings annexed to the request of Japanese Utility Model Application No. 042417/1984 (Laid-open No. 155173/1985) (JAPAN STORAGE BATTERY CO., LTD.) 16 October 1985 (1985-10-16), description, page 2, line 5 - page 6, last line, fig. 1-2 | 13 |
| A | JP 3235337 U (SHENZHEN KEDALI INDUSTRY CO., LTD.) 16 December 2021 (2021-12-16) | 1-19 |
| A | JP 2013-243075 A (KABUSHIKI KAISHA KOBE SEIKO SHO) 05 December 2013 (2013-12-05) | 1-19 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/035797** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-113312 A (PRIME PLANET ENERGY & SOLUTIONS INC.) 04 August 2022 (2022-08-04) | 1-19 |
| A | WO 2012/049907 A1 (SOODE NAGANO CO., LTD., NIPPON LIGHT METAL COMPANY, LTD.) 19 April 2012 (2012-04-19) | 1-19 |

Form PCT/ISA/210 (second sheet) (January 2015)

## INTERNATIONAL SEARCH REPORT
### Information on patent family members

International application No.

**PCT/JP2023/035797**

| Patent document cited in search report | Publication date (day/month/year) | Patent family member(s) | Publication date (day/month/year) |
|---|---|---|---|
| JP 2007-080598 A | 29 March 2007 | US 2007/0059586 A1 paragraphs [0029]-[0039], [0052]-[0054], fig. 1-4, example 1<br>CN 1933213 A | |
| JP 11-273640 A | 08 October 1999 | KR 10-0510782 B1 page 4, line 37 - page 5, line 40, fig. 1-4, 7-9, 17 | |
| JP 60-155173 U1 | 16 October 1985 | (Family: none) | |
| JP 3235337 U | 16 December 2021 | US 2022/0059900 A1<br>WO 2020/118966 A1<br>CN 209561521 U<br>KR 10-2021-0124194 A | |
| JP 2013-243075 A | 05 December 2013 | KR 10-2013-0130643 A<br><br>CN 103427059 A | |
| JP 2022-113312 A | 04 August 2022 | US 2022/0238947 A1<br><br>EP 4033578 A1<br>CN 114792865 A | |
| WO 2012/049907 A1 | 19 April 2012 | US 2013/0196188 A1<br><br>EP 2629350 A1<br>CN 103155214 A<br>KR 10-2013-0064133 A<br>JP 2012-104473 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004111155 A
- JP 2000285892 A

- JP 4716538 B